# EUROPEAN PATENT APPLICATION

(11) **EP 1 843 535 A1**
(43) Date of publication of application: **10.10.2007**
(21) Application number: 04807874.5
(22) Date of filing: 27.12.2004
(51) Int. Cl.: H04L 27/14

(54) **MSK SIGNAL CODE RESTORING DEVICE AND MSK SIGNAL CODE RESTORING PROGRAM**

(71) Applicant: Vehicle Information and Communication System Center, Chiyoda-ku, Tokyo (JP)
(72) Inventor: YAMAMOTO, Tetsuo Vehicle Inf. & Comm. Syst. Center, 2-2-1, Uchisaiwaicho, Chiyoda-ku, Tokyo (JP); OKADA, Kiyotaka Vehicle Inf. & Comm. Syst. Center, 2-2-1, Uchisaiwaicho, Chiyoda-ku, Tokyo (JP)
(74) Representative: Thun, Clemens
(86) International application number: PCT/JP2004/019519
(87) International publication number: WO 2006/070439

(57) **Abstract**

An MSK signal code decoding apparatus and an MSK signal code decoding program are provided which are capable of preventing occurrence of errors in decoded symbols even at a place where a signal level rapidly varies or a place to which reflection waves or interference waves come, i.e., even in a noisy transmission path. An MSK signal code decoding apparatus (1) decodes a symbol assigned to an MSK signal from an LMSK signal which is obtained by level control of the MSK signal which is modulated by an MSK which is a modulation method of DARC in an FM multiplexed broadcasting, includes: a sign component extracting means (7a); an operating means (7b); a symbol clock extracting means (9); a code discriminating means (11); and a code outputting means (17).

## Description

### TECHNICAL FIELD

The present invention relates to an MSK signal code decoding apparatus and an MSK signal code decoding program for decoding a symbol transmitted in an MSK signal.

### BACKGROUND ART

Conventionally, DARC (DAta Radio Channel, ITU Document 10/1012-E 16 June 1955 of a world standard specification) in an FM multiplexing method adopts a modulation method called LMSK (Level controlled MSK [Minimum Shift Keying]) (For example, see JP2000-138610 (paragraphs 0014~0016, Fig. 1). In the LMSK, a code information (symbol) having a frequency of 16 kHz which is modulated with a frequency of 80 kHz is defined as "1", and a code information (symbol) having the frequency of 16 kHz, modulated with a frequency of 72 kHz, is defined as "0". Among various methods of decoding the signal (LMSK signal) modulated by the LMSK, there is a delay detection method which is relatively simple in principle.

In the delay detection method, first, the input LMSK signal is delayed by a time interval of one symbol (62.5 µsec). The delayed LMSK signal is added to a next input LMSK signal. After this, in the delay detection method, the addition result is applied to a low-pass filter, and then discrimination is made between "1" and "0" with a threshold determined from an average of the output of the low-pass filter to reproduce the symbol.

More specifically, the LMSK adopted in the DARC in the FM multiplexing method, the symbol of "1" is assigned to the frequency of 80 kHz, and "0" is assigned to the frequency of 72 kHz, in which the basic principle is based on the cosine theorem of (sin α + sin β = 2sin ((α + β)/2)cos((α- β)/2)).

Thus, in the delay detection method, the term of "sin" in the right side is calculated from a sum of frequencies (80 kHz + 72 kHz) of the original sine wave. The term of "cos" in the right side is calculated from a difference (80 kHz - 72 kHz) in frequency of the original sine wave. Accordingly, the symbol (corresponding to the term of "cos" in the right side) can be obtained (decoded) by division with the term of "sin" in the right side.

Further, in the delay detection method, because the term of "sin" in the right side has a higher frequency (152 kHz/2=76 kHz), the symbol of a digital code having the frequency of 16 kHz is decoded by applying the signal to a low-pass filter or performing a moving average process to extract the symbol (the term of "cos" in the right side).

The delayed detection method is based on a sum of the LMSK signals having a time shift of one symbol (hereinafter referred to as a sum signal). The sum signal has a large value when the symbol is "1" and a small value when the symbol is "0". Further, the delayed detection method allows subtraction (the result of the subtraction is referred to as a difference signal) instead of addition of the LMSK signal delayed by one symbol to the next input LMSK signal. In this case, the difference signal has a small value when the symbol is "1" and a large value when the symbol is "0". In other words, a relation in the value between "1" and "0" is inverted in comparison with the sum signal.

However, in the delayed detection method, because the input LMSK signals are subject to addition or subtraction therebetween, if the LMSK signal includes noise, accurate decoding becomes impossible. More specifically, the delayed detection method is suitable for a transmission path having a low possibility in including noise in the input MSK signal, i.e., a transmission path originally having a low noise, but has a tendency of generation of errors in the decoded symbol in a transmission path including much noise.

Accordingly, the delayed detection method can be improved against noise by combining two of the addition method and the subtraction method between the input LMSK signal and the delayed signal. Among delayed detection methods derived by modification of the above-described delayed detection method there are a method in which the input LMSK signal is multiplied after delaying the input LMSK; a method in which the input LMSK signal is shifted (separated) by a time interval of a half of a symbol instead of the shift by the time interval of one symbol; and a method in which the input LMSK signal is shifted by just four cycles of the carrier (for five cycles, the code information (symbols) having the frequency of 16 kHz becomes "1", i.e., in a case where the symbol modulated with 80 kHz, the cycle is 4/5 for the symbol.

Among the other delayed detection methods there is a method which is relatively resistant to noise in which the input LMSK signal is multiplied after delay. However, at a noisy place, a delay detection method in which two methods of summing the input LMSK signal after delay and subtracting the input LMSK signal after delay has a low tendency in generating errors in the decoded symbols. However, depending on a receiving capability of the LMSK signal, and a structure or a method of a receiving device, errors in the decoded symbol according to the method of multiplying after delaying the LMSK signal can be unlikely to occur rather than them. In the above-described explanation, the LMSK signal having a level variation is exemplified. However, errors in an MSK signal with a constant amplitude level also can be unlikely to occur due to the same principle. Further, the MSK signal with a constant amplitude level is used in actual application due to a low effect of noise and the like.

### DISCLOSURE OF THE INVENTION

In the LMSK adopted in the DARC for the FM multiplexing method, instead of the delay detection method, a decoding method is being studied which is usable even at places where a signal level is low, or even at places to which many reflected waves or interference waves come.
For example, in a case where the LMSK adopted in the DARC for the FM multiplexing method is actually used in mobile reception in vehicles, a rapid variation in the signal level or reception of noise, reflection waves, or interference waves may frequently occur. Accordingly, a decoding method adapted to these cases is required.

However, in a case where the LMSK adopted in the DARC in the FM multiplexing method is used at places where a signal level is low or places to which many noises, reflection waves, and interference waves come, due to a nature of stereo sounds in the FM broadcast, harmonics of the stereo sounds interferes with the multiplexing region of the LMSK signal, so that waveforms of the LMSK becomes disturbed considerably. More specifically, the difference signal of the stereo sound is modulated at 38 kHz, and a center frequency of the multiplexed signal of the LMSK signal is 76 kHz, so that harmonics having a double frequency of the difference signal interfere with the multiplexed signal with an adverse effect.

To extract a multiplexed modulation wave from the multiplexed signal, it is necessary to use either of a high-pass filter for allowing signals in a frequency band equal to or higher than 76 kHz to pass therethrough or a band-pass filter for allowing signals of a frequency band having a center at 76 kHz to pass therethrough.
However, if the input signal includes noise in the case where the high-pass filter or the band-pass filter is used, an amplitude of the signal passing therethrough becomes inconstant. If the noise is large, a waveform of the output signal has a constricted form.

Originally, the amplitude of the modulation wave modulated by the MSK is constant. Thus, also in the LMSK signal of which amplitude level is controlled to be constant, i.e., in the MSK signal, a level of the minimum amplitude of the multiplexed modulation wave is presumably kept. Nevertheless, at actual receiving places (receiving area, or receiving region), there are cases where a minimum amplitude level cannot be obtained. Further, in the LMSK, it is possible to limit the multiplexed signal (curtail parts having amplitudes greater than a fixed level) with a limiter to provide a constant amplitude, and detect by the delayed detection method for processing both components of "1" and "0".
In addition, to remove noise from the code components included in the LMSK signal, verification for several symbols is made to correct erroneously decoded codes to reproduce accurate symbols.

To solve the above-mentioned problems, the present invention aims to provide an MSK signal code decoding apparatus and an MSK signal code decoding program capable of preventing errors in the decoded symbol from occurring even at a place where a signal level rapidly varies, or in a noisy transmission path.

In order to solve the above-mentioned problem, an MSK signal code decoding apparatus decodes a symbol assigned to an MSK signal from an LMSK signal obtained by controlling a level of the MSK signal which is modulated by the MSK based on a modulation method of the DARC for the FM multiplexed broadcasting, and includes a both sign component extracting means, an operating means, a symbol clock extracting means, a code discriminating means, and a code outputting means.

According to this structure, the MSK signal code decoding apparatus extracts signals of codes of "1" and "0" with the both sign component extracting means.
The signals of the both signs are combined after removing unnecessary components with the operating means to generate the MSK code. The both sign component extracting means extracts the component of "1", for example, by delaying the MSK signal and adding the MSK signal prior to delaying to the delayed LMSK signal. In this case, a time interval of delaying the MSK signal is a predetermined interval, for example, a preset time interval, i.e., a time interval corresponding to several symbols of the symbols. The operation of extracting the component of the code of "1" is performed, for example, by obtaining absolute values of the added signal, averaging the absolute values, removing unnecessary components such as harmonics from the averaged values to extract only effective signal components. Further, the operating means combines components of extracted "1" and "0" to generate an MSK code.

Next, the MSK signal code decoding apparatus discriminates the MSK codes with the code discriminating means to output the decoded code. The discrimination of the code is made based on an amplitude of the MSK code. Further, because the MSK code corresponds to positive and negative values for the symbols of "1" and "0", a value of threshold for discrimination is clear, and thus the discrimination by the code discriminating means has a higher accuracy than the conventional method in which either of components of "0" or "1" is extracted.

In addition, the MSK signal code decoding apparatus which restores the symbol assigned to the MSK signal from the LMSK signal obtained by controlling a level of the MSK signal modulated by the MSK in the modulating method of DARC in the FM multiplexed broadcasting, is characterized in that it includes a both sign component extracting means, an operating means, a symbol clock extracting means, a code discriminating means, a code correction component extracting means, a code selecting means, and a code outputting means.

According to the structure, in the MSK signal code decoding apparatus, the code correction component extracting means outputs a corrected code in which the decoded code is corrected on the basis of the MSK signal and the decoded code, and the code selecting means selects either of the decoded code or the corrected code to output the selected code by the code outputting means. For example, it is assumed that the code correction component extracting means includes an MSK signal storing means, a reference code generating means, a reference MSK signal generating means, a carrier phase extracting means, an MSK signal reproducing means, a multiplication averaging means, a code correcting means, and a re-processing judging means. Then, in the MSK signal code decoding apparatus, the MSK signal storing means stores the MSK signal, and the reference MSK signal generating means generates a reference MSK signal which is obtained by modulating the reference codes including "1" and "0" alternately arranged for one symbol interval or several symbol intervals. Next, the MSK signal code decoding apparatus extracts a carrier phase of the MSK signal (stored MSK signal) stored in the MSK signal storage means using the reference MSK signal generated by the reference MSK signal generating means. Next, in the MSK signal code decoding apparatus, the MSK signal reproducing means outputs a reproduced MSK signal with the decoded code on the basis of the carrier phase extracted by the carrier phase extracting means. Then, in the MSK signal code decoding means, the code correcting means judges whether inversion between positive and negative signs in the waveform of a verification code to output a corrected code which is correct. Further, the code correcting means can detect any code including an error by checking a polarity of the verification code for several symbol intervals, providing a large effect in the code correction.

Further, the MSK signal code decoding apparatus which decodes the symbol assigned to the MSK signal from the LMSK signal obtained by controlling a level of the MSK signal modulated by the MSK based on the modulating method of the DARC for the FM multiplexed broadcasting is characterized in that it includes a both sign component extracting means, an operating means, a symbol clock extracting means, a code discriminating means, a code confirming means, a code selecting means, and a code outputting means.

According to the structure, in the MSK signal code decoding apparatus, the code confirming means forms a predetermined number of blocks combined, and obtain weights in the blocks on the basis of a difference between the number of the decoded codes having positive values and the number of the decoded codes having negative values to output a confirmed code in which confirmation is made whether the decoded code is correct or incorrect. For example, the code confirming means forms a predetermined number of blocks combined. Calculating values delayed by an interval of a predetermined number of symbols (for example, two symbols) provides information indicating whether a relation between consecutive two codes is identical or different (immediately prior consecutive two codes). This information allows the decoded code to be corrected. Further, the code confirming means divides a symbol into several blocks and makes an operation for each block to determine the sign between positive and negative of the blocks by majority decision. On the basis of the majority decision, a weights is obtained for the code discrimination (mainly, confirmed code) by the code discriminating means, and further a weight is obtained from the majority decision of the blocks in correcting the code by the code correction component extracting means, and the weight is compared with the weight in the code discrimination. Only when the weight of the corrected code is greater than the weight of the confirmed code, the correction is performed. Further, because the MSK signal code decoding apparatus determines the symbol by comparing the decoded code obtained by the code discriminating means with the corrected code obtained by the code correction component extracting means in weight, the code error can be suppressed even at a noisy location.

Further, the MSK signal code decoding apparatus decodes the symbol assigned to the MSK signal from the LMSK signal obtained by controlling the level of the MSK signal modulated by the MSK based on the modulating method of the DARC for the FM multiplexed broadcasting and includes a code correction component extracting means and a code outputting means.

According to the structure, in the MSK signal code decoding apparatus, the code correction component extracting means outputs a corrected code which is subjected to code correction of the symbol assigned to the MSK signal on the basis of the MSK signal and the reference code including "1" and "0" alternately arranged in time base for an interval of one or a plurality of symbols of the MSK signal and the symbol.
Then, in the MSK signal code decoding apparatus, the code outputting means outputs the corrected code outputted by the code correction component extracting means as the symbol with the code outputting means.
In other words, the MSK signal code decoding apparatus can output a correct symbol with a relatively simple structure including the code correction component extracting means and the code outputting means without using the both sign component extracting means, the operating means, code discriminating means, and the symbol clock extracting means defined by Claim 1.

Further, the MSK signal code decoding apparatus decodes the symbol assigned to the MSK signal from the LMSK signal obtained by controlling a level of the MSK signal modulated by the MSK based on the modulating method of the DARC for the FM multiplexed broadcasting and includes a both sign component extracting means, an operating means, a symbol clock extracting means, a code discriminating means, a code correction component extracting means, a.code confirming means, and a code outputting means.

According to the structure, in the MSK signal code decoding apparatus, the both sign component extracting means extracts signals of "1" and "0" of the symbols from the MSK signal obtained by adjusting an amplitude of the input LMSK signal, and the operating means generates an MSK signal of which at least high frequency component is removed from the signal extracted by the both sign component extracting means. Next, in the MSK signal code decoding apparatus, the symbol clock extracting means extracts a symbol clock from the MSK code generated by the operating means, and the code discriminating means outputs a decoded code obtained by discriminating the MSK code between positive and negative on the basis of the symbol clock extracted by the symbol clock extracting means. Further, in the MSK signal code decoding apparatus, the code confirming means forms a predetermined number of blocks combined for decoded codes and weights the blocks to output a confirmed code resulting from confirming whether the decoded code is correct or incorrect.

Further, in the MSK signal code decoding apparatus, the code correction component extracting means outputs a first corrected code obtained by code correction of the decoded code on the basis of the MSK signal and the decoded code outputted by the code discriminating means and a second corrected code obtained by code correction of the symbol assigned to the MSK signal on the basis of the MSK signal and the confirmed code outputted by the code conforming means. In the MSK signal code decoding apparatus, the code selecting means selects either of the decoded code discriminated by the code discriminating means, the first corrected code, the second corrected code, or the confirmed code to output the selected one as a symbol with the code outputting means. Although the MSK signal code decoding apparatus has fewer merits in simplifying the structure, a correction power can be improved by selecting either of the decoded code, the confirmed code, or the corrected code.

Here, a description of an MSK signal code decoding program will be omitted because it is identical with the processes of respective structures in the MSK signal code decoding apparatus.

According to the MSK signal code decoding apparatus, obtains components of "1" and "0" of the symbol from the MSK, signal obtained by adjusting an amplitude of the input LMSK signal to operate the MSK code. Because the symbol is discriminated by discriminating these MSK codes, occurrence of an error in the decoded symbol can be prevented even at places where a signal level rapidly changes, or places to which many reflected waves or interference waves come.

Further, according to the MSK signal code decoding apparatus, the corrected code is outputted using the MSK signal and the decoded code, and either of the decoded code or the corrected code is selected as the symbol, wherein the corrected code is obtained by verifying codes for an interval of several symbols with respect to errors in signs, so that occurrence of errors in the decoded symbol can be prevented even at places where a signal level rapidly varies, or places to which many reflected waves or interference waves come, i.e., even in a noisy transmission path.

Further, the MSK signal code decoding apparatus has a structure in which a simple code confirming means is added to the structure including the both sign code components extracting means; the operating means, the symbol clock extracting means, the code discriminating means, and the code outputting means. Accordingly, a processing power can be increased by that the code confirmation is made by dividing the MSK codes and code correction process is simplified by weighting. Thus, occurrence of an error in the decoded symbol can be prevented even at places where a signal level rapidly varies, or places to which many reflected waves or interference waves come, i.e., even in a noisy transmission path.

Further, the MSK signal code decoding apparatus can prevent occurrence of errors in the symbol with a simple structure in which a part of the structure including the both sign component extracting means, the operating means, the symbol clock extracting means, the code discriminating means, and the code outputting means is omitted.

Further the MSK signal code decoding apparatus can reproduce a symbol in which errors are few with a signal process of selecting either of the decoded code, the confirmed code, or the corrected code to output the selected one, and thus, occurrence of an error in the decoded symbol can be prevented even at places where a signal level rapidly varies, or places to which many reflected waves or interference waves come, i.e., even in a noisy transmission path.

### BRIEF DESCRIPTION OF DRAWINGS

[Fig. 1] It is a block diagram of an MSK signal code decoding apparatus according to an embodiment of the present invention.
[Fig. 2] It is a diagram for explaining transmission of FM multiplexed broadcasting, wherein (a) is a chart for comparing respective methods of FM multiplexed broadcasting, and (b) is a chart for showing a signal level of an LMSK signal.
[Fig. 3] It is a chart for explaining a modulation method, wherein (a) is a chart for comparing an FM base band signal FM-modulated with a signal level of the LMSK, and (b) is a chart showing an LMSK frequency shift.
[Fig. 4] It is a diagram for explaining a relation between frequencies and waveforms in a multiplexed modulation signal.
[Fig. 5] It is a diagram for showing spectrums of the multiplex-modulated signal.
[Fig. 6] It is a diagram for explaining a delaying and adding means shown in Fig. 1.
[Fig. 7] It is a diagram for explaining a difference operated by the operating means shown in Fig. 1.
[Fig. 8] It is a diagram for showing results of the delaying operation used in a code component extracting means shown in Fig. 1.
[Fig. 9] It is a block diagram for showing an example of a structure of a code confirming means shown in Fig. 1.
[Fig. 10] It is a chart for explaining blocking by a code confirming means shown in Fig. 1.
[Fig. 11] It is a chart for explaining extraction of a symbol clock from a process of a reference MSK signal.
[Fig. 12] It is a chart for explaining change (transition) of waveforms from when the LMSK signal is inputted into the MSK signal code decoding apparatus shown in Fig. 1 to when the symbol of the MSK signal is corrected by a code correcting means.
[Fig. 13] It is a block diagram for showing an example of a structure of a code outputting means shown in Fig. 1.
[Fig. 14] It is a flowchart for explaining an operation (general decoding) of the MSK signal code decoding apparatus shown in Fig. 1.
[Fig. 15] It is a flowchart for explaining an operation (correction decoding) of the MSK signal code decoding apparatus shown in Fig. 1.
[Fig. 16] It is a flowchart for explaining an operation of the code confirming means of the MSK signal code decoding apparatus shown in Fig. 1.

### EMBODIMENT FOR CARRYING OUT THE INVENTION

Next, with reference to drawings will be described an embodiment of the present invention.

### <Structure of MSK Signal Code Decoding Apparatus>

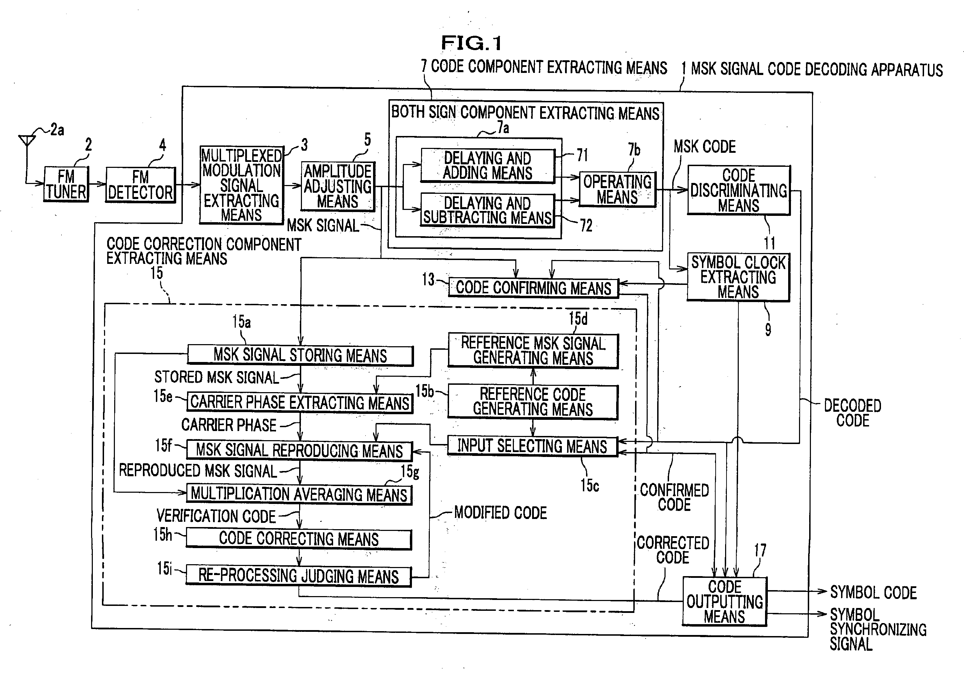

Fig. 1 is a block diagram of an MSK signal code decoding apparatus. As shown in Fig. 1, the MSK signal code decoding apparatus 1 for decoding a symbol assigned to an MSK (Minimum Shift Keying) modulation wave (MSK signal) from a multiplexed modulation signal which is modulated and multiplexed for the DARC (DAta Radio Channel) in the FM multiplexed broadcasting, includes a multiplexed modulation signal extracting means 3, an amplitude adjusting means 5, a code component extracting means 7, a symbol clock extracting means 9, a code discriminating means 11, a code confirming means 13, a code correcting component extracting means 15, and a code outputting means 17.

Further, the MSK signal code decoding apparatus 1 tunes an FM radio wave received by an antenna 2a to select a broadcast station to obtain a composite signal of reproduction of an FM radio wave from a broad cast station performing an FM multiplexed broadcast. More specifically, the MSK signal code decoding apparatus 1 includes an FM tuner 2 for selecting the broadcast station (a reception channel) performing an FM multiplexed broadcast and an FM detector 4 for detecting a FM composite signal selected by the FM tuner 2.

The multiplexed modulation signal extracting means 3 extracts from the FM composite signal detected (detection) by the FM detector 4 a multiplexed modulation signal in which predetermined information is multiplexed. The multiplexed modulation signal is applied to an amplitude adjusting means 5. The predetermined information is, for example, road traffic information for reporting information such as traffic-jam status for each predetermined section of a road, a construction status, a traffic accident, a traveling time (time necessary for traveling), and facility information indicating buildings around the road such as a gas station, a convenience store, and parks. Further, characters and simple figures are broadcasted on a general text broadcasting.

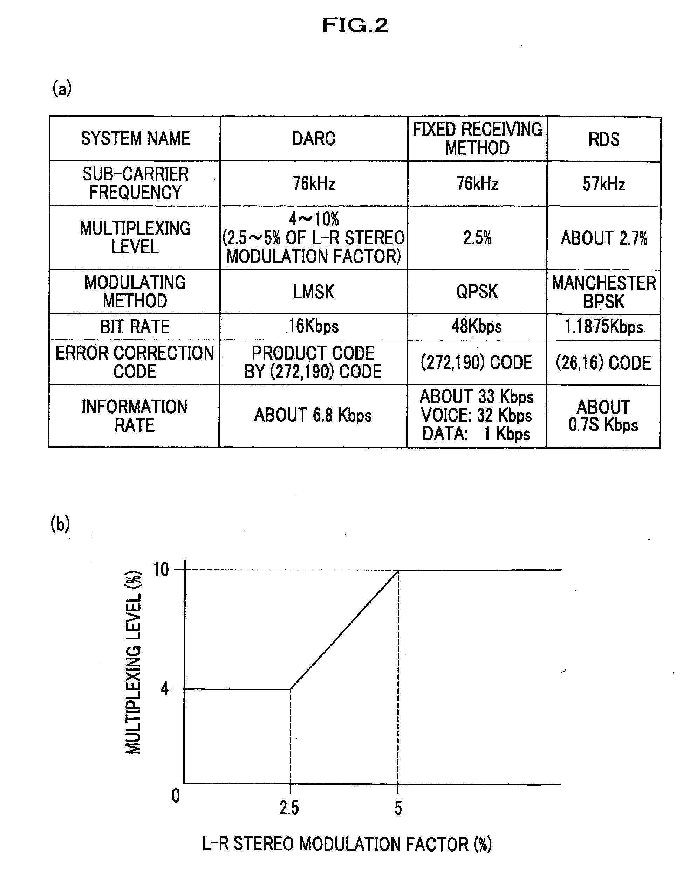

With reference to Figs. 2 to 5 will be described the multiplexed modulation signal. Fig. 2(a) shows a table for comparing the DARC method for FM multiplexed broadcast with other methods, and Fig. 2(b) is a chart for showing a level of the multiplexed modulation signal (LMSK signal). As shown in a column of a system name of "DARC" in the transmission method of the FM multiplexed broadcast in Fig. 2(a), the multiplexed modulation signal has a sub-carrier frequency of 76 kHz, a multiplexing level of from 4 to 10%, a modulation method of the LMSK, a bit rate of 16 Kbps, an error corrected code using a product code of "(272,190)-code", and an information rate of about 6.8 Kbps.

Further, as shown in Fig. 2B, when the multiplexing level of the multiplexed modulation signal (LMSK signal) is 4%, a stereo L-R percent modulation is 2.5%. When the multiplexing level is 10%, the stereo L-R percent modulation is 5%.

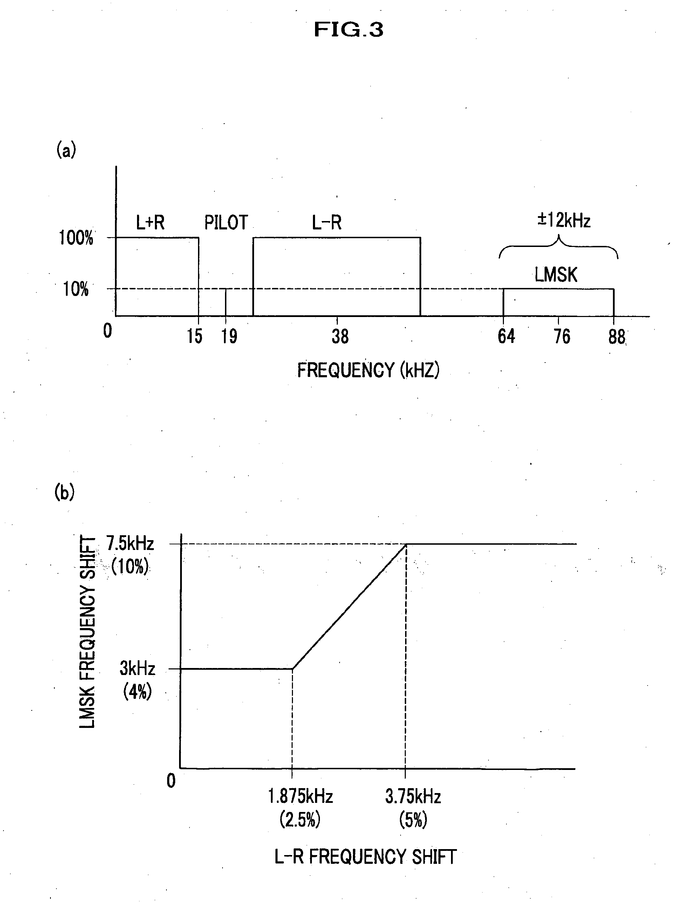

Further, with reference to Fig. 3 will be described a difference between the multiplexed modulation signal (LMSK signal) and an FM base band signal which are shown in Fig. 2(b). Fig. 3(a) shows levels of the FM base band signal and the LMSK signal. Fig. 3(b) shows a frequency variation of L-R in the multiplexed modulation signal (LMSK signal).

As shown in Fig. 3(a), the FM base band signal ranges from 0 to 15 kHz when the broadcasting is monaural and a signal of L(left) +R (right) ranges from 0 to 15 kHz in a stereo broadcasting. A pilot signal is at 19 kHz, and a signal of L-R (stereo difference signal) is in a band having a center of 38 kHz. More specifically, a stereo broadcasting is distinguished from a monaural broadcast on a receiving side based on the pilot signal.

A frequency of the multiplexed modulation signal (LMSK signal) in the DARC of the FM multiplexing method is in a band of ±12 kHz having a center frequency of 76 kHz which is four times the frequency of the pilot signal. Further, the multiplexed modulation signal (LMSK signal) has a power level which is 10% of the FM base band signal.

Further, as shown in Fig. 3(b), a frequency shift of L-R in the multiplexed modulation signal (LMSK signal) is 1.875 kHz (2.5%) when an LMSK signal frequency shift is 3 kHz (4%), and is 3.75 kHz (5%) when the LMSK signal frequency shift is 7.5 kHz (10%) (see Fig. 2 (a).

Further, the multiplexed signal (LMSK signal), two frequencies are assigned, i.e., "0" is assigned to f1 = 72 kHz, and "1" is assigned to f2 = 80 kHz. The modulated signal of the MSK is generated such that these frequencies are continuously connected in which a level of the modulated signal of the MSK is adjusted.

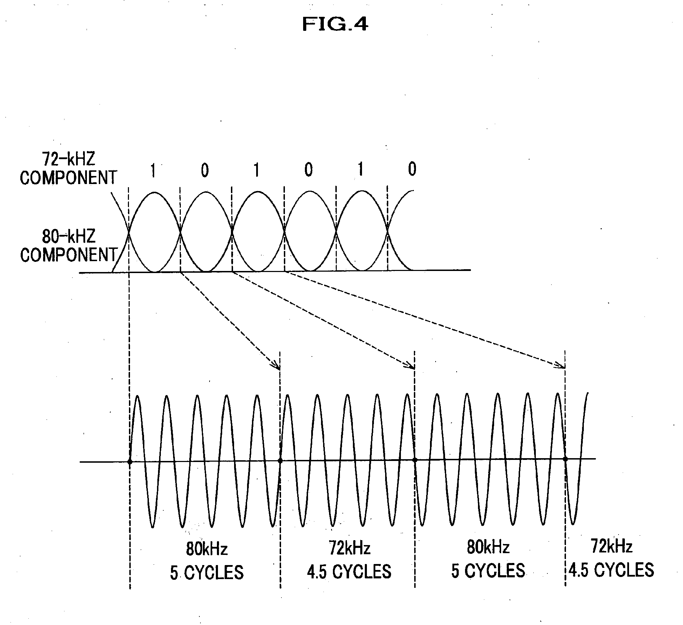

Further, because when a bit rate which is a transmission speed of the multiplexed modulation signal (LMSK signal) is 16 Kbps, because one symbol length is 62.5 µs, as shown in Fig. 4, a component of 72 kHz has 4.5 cycles (72/16 = 4.5) and a component of 80 kHz has 5 cycles (80/16 = 5).

Further, when the multiplexed modulation signal is demodulated, the components of 72 kHz and 80 kHz are separated with a filter, and an average is obtained by the moving average and they are compared with the average level for determination between "0" and "1" (details will be described later). Further, in the multiplexed modulation signal if a phase of the component of 72 kHz is discontinuous at a change from the component of 80 kHz to the component of 72 kHz, ± in the component of 80 kHz are inverted for continuous connection.

Further, as shown in Fig. 4, when a wave of the component of 80 kHz is a wave crest (convex) (and a wave of the component of 72 kHz is a valley (concave), the value is "1". When a wave of the component of 72 kHz is a wave crest (convex) (and a wave of the component of 80 kHz is a valley (concave), the value is "0".

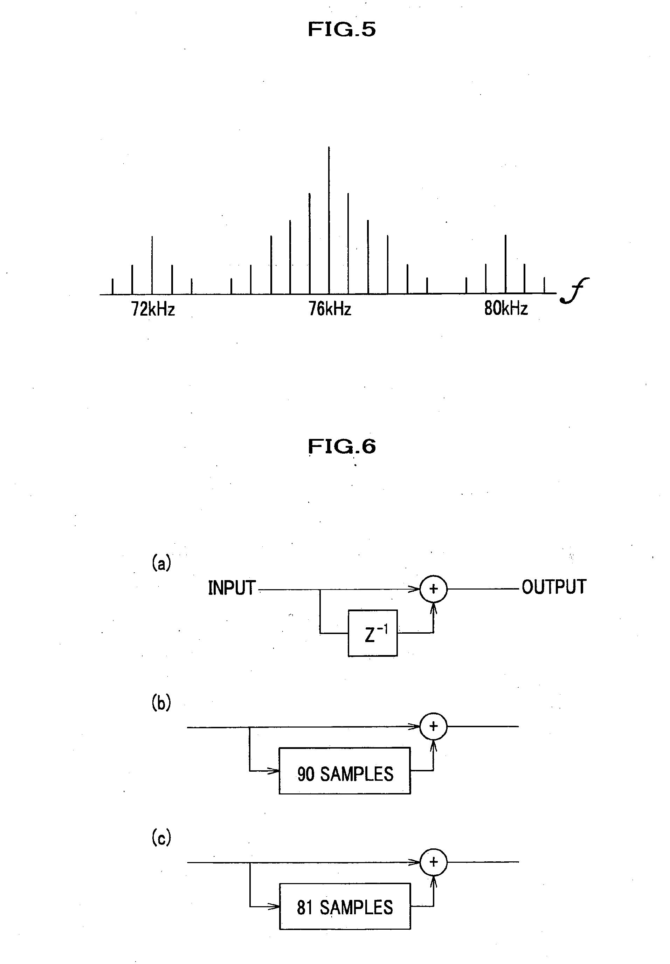

Further, when having the frequency of 80 kHz, the multiplexed modulation signal (LMSK signal) has the value of "1". When having the frequency of 72 kHz, the multiplexed modulation signal (LMSK signal) has the value of "0". Thus, having values of "1" and "0" which are repeated, the multiplexed modulation signal has three spectrums of 72 kHz, 76 kHz, and 80 kHz. However, if the multiplexed modulation signal has the values of "0" or "1" continuously instead of repetition of "1" and "0", as shown in Fig. 5, the spectrum of 76 kHz spreads therearound, and spectrums of 72 kHz and 80 kHz also spread therearound.

In this embodiment, the multiplexed modulation signal extracting means 3 extracts the multiplexed modulation signal from the composite signal with a band-pass filter (band-pass filter) having a bandwidth of 24 kHz around 76 kHz, in which a phase characteristic is secured, to allow components at a frequency band of the multiplexed modulation signal to pass therethrough.

Returning to Fig. 1, the description of the structure of the MSK signal code decoding apparatus 1 continues.
The amplitude adjusting means 5 adjusts an amplitude (a peak value) of the multiplexed modulation signal extracted by the multiplexed modulation signal extracting means 3 to output the LMSK signal as an MSK signal having a constant amplitude. The amplitude adjusting means 5 corrects (averages) a disturbance in amplitude generated in the multiplexed modulation signal due to noise caused to be included in the multiplexed modulation signal during transmission. In this embodiment, an average of the amplitude of the multiplexed modulation signal is obtained, and the amplitudes are united to the average or a predetermined value. More specifically, the peak value of the multiplexed modulation signal is obtained, and a predetermined value is changed to values smaller than the peak value so that the peak value is constant. Intermediate values other than the peak value are proportionally divided value.

Here, will be described briefly a reason and a method of correcting the disturbance in amplitude with the amplitude adjusting means 5. The multiplexed modulation signal (LMSK signal) has a level always varying due to the difference signal of sounds. Because use of the LMSK signal having the level varying in post processes provides adverse effects on a code discrimination or a code correction, the MSK signal having a constant amplitude is necessary.

The code component extracting means 7 delays the MSK signal obtained by the amplitude adjusting means 5 by a predetermined time interval (62. 5 µs in this embodiment) to perform operation on one-symbol-prior MSK signal, and includes both sign component extracting means 7a and an operating means 7b.
The both sign component extracting means 7a extracts signals (components) of "1" and "0" and includes a delaying and adding means 71 and a delaying and subtracting means 72.

The delaying and adding means 71 is provided for extracting a signal (component) of the symbol of "1" and delays the MSK signal, having the amplitude adjusted by the amplitude adjusting means 5, by a predetermined time interval (62.5 µs in this embodiment) for addition to the one-symbol-prior MSK signal.
The delaying and subtracting means 72 is provided for extracting a signal (component) of the symbol of "0" and delays the MSK signal, having the amplitude adjusted by the amplitude adjusting means 5, by the predetermined time interval (62.5 µs in this embodiment) for subtraction from the one-symbol-prior MSK signal.

The signal (component) of the symbol of "1" extracted by the delaying and adding means 71, i.e., a result of addition in the delaying and adding means 71 is referred to as an addition signal. The addition with a one-symbol-delay by the delaying and adding means 71 is made to a five-cycle-prior signal because, for example, there are five cycles (5 periods) of the frequency of 80 kHz in the case of the symbol of "1" modulated in the MSK signal. When the symbol modulated in the MSK signal is "0", the addition with a one-symbol-delay is made to a 4.5-cycle-prior signal by the delaying and adding means 71 because there are 4.5 cycles (4.5 periods) of the frequency of 72 kHz in the case of the symbol of "0" modulated in the MSK signal.

Further, in a case where two symbols added by the delaying and adding means 71 are 80 kHz and 72 kHz, i.e., in a case where the symbol of 80 kHz and the symbol of 72 kHz occur continuously, the one-symbol-delayed addition shifts a phase and finally the phase becomes inverted, so that the result is "0". More specifically, the delaying and adding means 71 makes addition to the one-symbol-prior MSK signal to allow discrimination whether the symbol is "1" of the frequency of 80 kHz or "0" of the frequency of 72 kHz.

As mentioned above, the delaying and adding means 71 adds the delayed MSK signal to the MSK signal, so that cycles of the added MSK signals are mutually shifted, outputting various values. More specifically, the values of "0" and "1" are discriminated from each other based on the fact that when the MSK singles are in phase, an addition resultant value becomes large, and when the MSK signals are out of phase, the addition resultant value becomes small.

With reference to Fig. 6. will be described the structure of the delaying and adding means 71 more specifically.
As shown in Fig. 6(a), the delaying and adding means 71 includes a delaying part of "Z⁻¹" for delaying the MSK signal and an adding part of "+" for adding the delayed MSK signal to the next input MSK signal. For example, it is assumed that one symbol is sampled to have 90 samples (a section of 62.5 µs of the MSK signal), one cycle of the frequency of 72 kHz is sampled to have 20 samples (4.5 cycles for 90 samples), and one cycle of the frequency of 80 kHz is sampled to have 18 samples (5 cycles for 90 samples).

In other words, addition of one-symbol delayed MSK signal at 80 kHz can be done by adding the 90-sample-prior MSK signal to the next input MSK signal, as shown in Fig. 6(b). This makes the output (the amplitude of the addition result MSK signal) large when the next input MSK signal is 80 kHz.

Further, as shown in Fig. 6(c), if the delay time is shifted by nine samples, and thus a 81-sample-prior MSK signal is added to the next input MSK signal, the output (amplitude of the added MSK signal) becomes zero if the next input MSK has the frequency of 80 kHz.

As mentioned above, the number of samples (sampling interval) for the delayed MSK signal to be added by the delaying part of "Z⁻¹" of the delaying and adding means 71 can be adjusted. Accordingly, in a case of the frequency of 72 kHz, because ten samples correspond to a half cycle thereof, addition of 10-sample-prior MSK signal to the next input MSK signal results in the output having a value of zero. Addition of 20-sample-prior MSK signal to the next input MSK signal results in the output having a value other than zero. Addition of 30-sample-prior MSK signal to the next input MSK signal results in the output having the value of zero. Similarly, addition of (odd number × 10)-sample-prior MSK signal to the next input MSK signal results in the output having the value of zero. Addition of (even number × 10)-sample-prior MSK signal to the next input MSK signal results in the output having the value other than zero.

On the other hand, the signal (component) of the symbol extracted by the delaying and subtracting means 72, i.e., a subtraction result of the delaying and subtracting means 72, is referred to as a subtraction signal. The subtraction signal of the delaying and subtracting means 72 becomes large in amplitude when the symbol of the MSK signal is zero in contrast to the addition signal of the delaying and adding means 71. The delaying and subtracting means 72 includes a subtracting part of "-" for subtracting the next input MSK signal from the delayed MSK signal instead of the adding part of "+" of the delaying and adding means 71 shown in Fig. 6(a).

The operating means 7b calculates a difference between a result of adding the MSK signals by the delaying and adding means 71 and a result of subtracting the next input MSK signal from the delayed MSK signal by the delaying and subtracting means 72.
As a result, an MSK code can be generated such that "1" of the symbol has a positive amplitude, and "0" of the symbol has-a negative amplitude.

In other words, the operating means 7b outputs a component of "1" of the MSK signal on the basis of the addition signal from the delaying and adding means 71. The operating means 7b obtains the component of "1" of the MSK signal by an absolute value process for the addition signal (obtaining both sign wave components) and an averaging process (an average of a sum of several samples before and after the present sample).
The operating means 7b outputs the component of "0" of the MSK code on the basis of the subtraction signal supplied from the delaying and subtracting means 72. The operating means 7b performs the absolute value process for the subtraction signal (obtaining both sign wave components) and an averaging process (an average of a sum of several samples before and after the present sample). Further, the operating means 7b obtains a difference of the result of the above-mentioned two averaging processes to obtain the component of "0" of the MSK code. To obtain the difference, it is preferable to perform a process of equalizing amplitudes of these two outputs. The MSK code obtained by the operating means 7b is inputted into the symbol clock extracting means 9 and the code discriminating means 11.

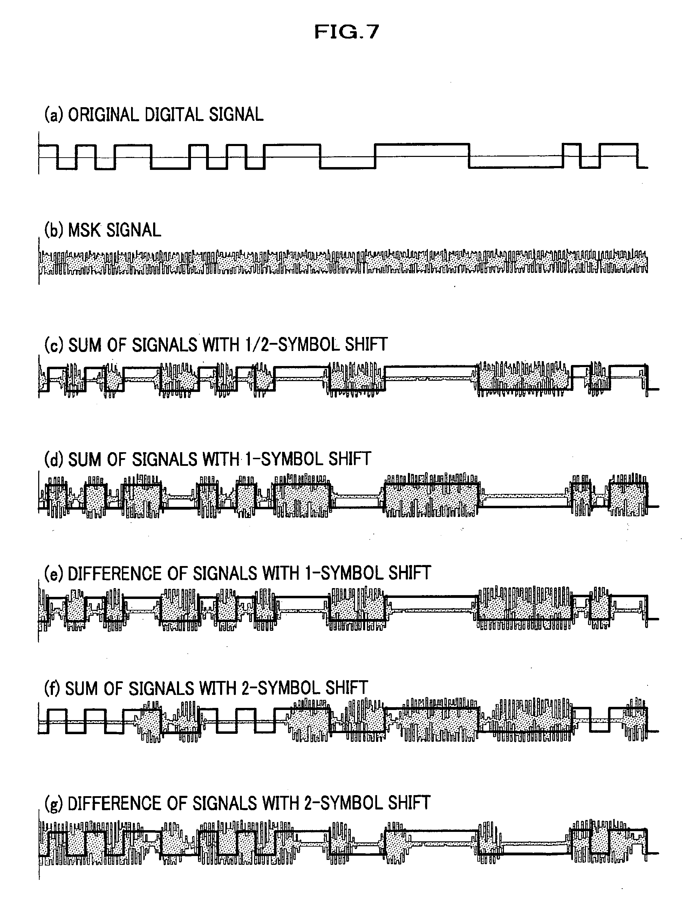

With reference to Fig. 7, will be described extracted waveforms obtained by various operating methods which use the delayed signal (addition signal and subtraction signal) as a method of extracting the signals (components) of "1" and "0" from the MSK signal.

Fig. 7(a) shows a waveform of a digital code (symbols) on a transmission side, i.e., a waveform of the original digital signal. Fig. 7(b) shows a waveform of an MSK signal obtained by amplitude-adjusting the LMSK signal wave obtained by L-MSK-modulating (LMSK modulating) the original digital signal shown in Fig. 7(a).

Fig. 7(c) shows a waveform obtained by addition of signals having a delay of 1/2 of a symbol. When the symbol is zero, the amplitude becomes large.

Fig. 7(d) shows a waveform obtained by addition of signals delayed by one-symbol. As shown in Fig. 7(d), the amplitude becomes large when the symbol is "1". Then, checking the envelope can restore the original digital codes (symbol). Fig: 7(e) shows a waveform obtained by subtraction of a signal delayed by one-symbol. As shown in Fig. 7(e), the amplitude becomes large when the symbol is "0". Checking this envelope also can restore the original code (symbol).

Further, Fig. 7(f) shows a waveform obtained by addition of signals delayed by two symbols. As shown in Fig. 7(f), when the same symbols, i.e., the symbol of "1" and the symbol of "1", continuously occur, or when the same symbols, i.e., the symbol of "0" and the symbol of "0", continuously occur, the amplitude becomes large.

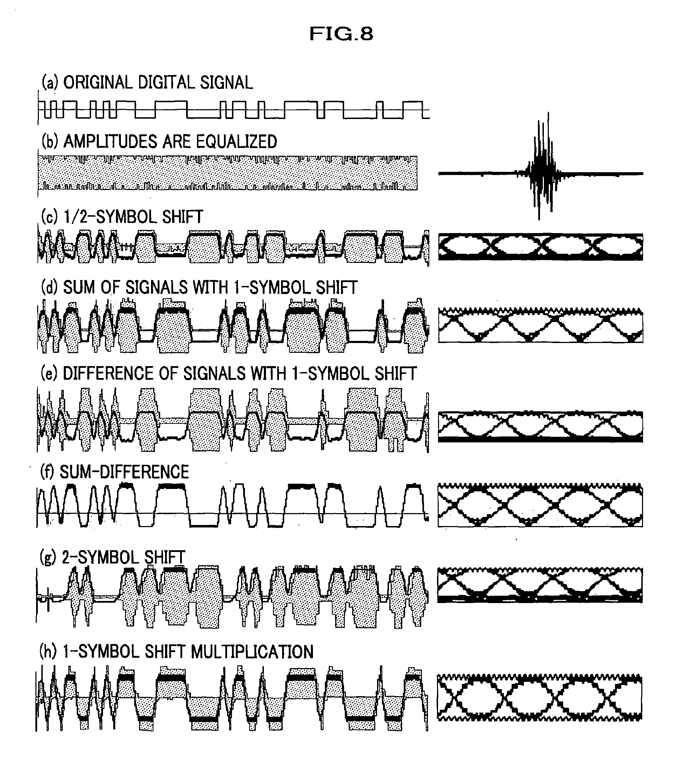

Fig. 7(g) shows a waveform obtained by subtraction in the signals delayed by two symbols. As shown in Fig. 8(g), the amplitude becomes large when the same symbols continuously occur at a timing when the symbol changes.

Fig. 7 shows methods of operating the MSK signal from signals, having delay by some symbol intervals, being subject to addition or subtraction. The both sign extracting means 11 can have operation with the MSK signals having delay of some symbol intervals therebetween. When they are in phase with each other, the amplitude of the operation result becomes large. When they are out of phase, the amplitude of the operation result becomes small. Further, in an operation of signals, modulated by the frequencies of 80 kHz and 72 kHz, having delay which is an integer times the cycles, when the same symbols are modulated, there is such a character that the amplitude becomes large.

Fig. 8 shows waveforms derived by applying a following process (a process of outputting the MSK code) to the results of Fig. 7. For example, Fig. 8(d) corresponds to Fig. 7(d). Fig. 8(d) shows a result of obtaining absolute values of adding the one-symbol-delayed signal and averaging with a solid line. The result is the same as the result of a full-wave rectification of addition of the one-symbol-delayed signal and low-pass-filtering. Further, Fig. 8(e) shows a result which is the same as a result of full-wave-rectifying the values of subtraction of the one-symbol-delayed signal and low-pass-filtering it. Fig. 8(f) shows an output waveform of the operating means 7b, i.e., the MSK code which is an output waveform of the operating means 7b.
The above description is made for the left sides of Figs. 8(a) to 8(f). The right side of Fig. 8(b) shows a spectrum of the MSK signal. The right sides of Figs. 8(c) to Fig. 8(f) show eye patterns of the waveforms, respectively.

Returning to Fig. 1, the description of the structure of the MSK signal code decoding apparatus 1 will be continued.
The symbol clock extracting means 9 is provided for checking zero-cross points of the MSK code and determining a symbol clock at the zero-cross points. However, in a noisy case, because the MSK code includes fluctuation, the symbol clock extracting means 9 determines the symbol clock on the basis of a majority for several symbols.

In the symbol clock extracting means 9, in a case where a processing result is outputted as the MSK code in which a code operation process within a symbol is divided into some blocks in the code component extracting means 7, any blocks where the zero-crossing instantaneously occur due to noise are excluded, which allows an accuracy in extracting the symbol clock.

The code discriminating means 11 discriminates between an MSK code, having a positive amplitude, corresponding to the symbol of "1" outputted by the code component extracting means 7 and an MSK code, having a negative amplitude, corresponding to "0" of the symbol, and outputs a restored code as a result of the discrimination. Further, the code discriminating means 11 reproduces (restores) a decoded code corresponding to "1" or "0" of the symbol on the basis of the symbol clock generated from the MSK code by the symbol clock extracting means 9.

Returning to Fig. 8 again, will be described reproduction (restoration) of the symbol by the code discriminating means 11.
Fig. 8(a) shows a waveform of a digital code (symbol) on the side of transmission, i.e., the original digital signal. Fig. 8(b) shows an LMSK signal including noise. Fig. 8(c) shows an waveform resulting from addition of signals having delay of 1/2 symbol therebetween in which a thick line indicates an envelope of absolute values derived from the signal. In addition, the eye patterns shown on the right can be obtained by overwriting the envelope on the basis of a symbol length.

Fig. 8(d) shows a waveform of a signal resulting from addition of signals having a delay of one symbol, and Fig. 8(e) shows a waveform of a signal resulting from subtraction between signals having the delay of one symbol. In the drawings of Fig. 8(d) and Fig. 8(e), absolute values of the addition or subtraction result are averaged over several sections (average of sums of averages of total 36 samples (prior 18 samples and post 18 samples). Fig. 8(d) and Fig. 8(e) show the results with thick lines.

Further Fig. 8(f) shows values obtained by subtracting values represented by the thick line of Fig. 8(e) from values represented by the thick line of Fig. 8(d). In other words, it shows the MSK code which is a result of the process in the both sign component extracting means 7a and the operating means 7b.

The code discriminating means 11 discriminates between "1" and "0" of the symbols from the result of Fig. 8(f). More specifically, as shown in Fig. 8(f), the code discriminating means 11 restores the symbols by determining that parts of the waveform which are positive over zero are "1" of the symbol, and determining that parts of the waveform which are negative under zero are "0" of the symbols, the waveform being obtained by subtracting the subtraction result (subtraction signal) from the addition result (addition signal). Further, as shown in Fig. 8(g), if the same symbols are consecutive, such as "11" and "00", the amplitude becomes large. This characteristic is used in the code confirming means 13.

In the above description, the addition and subtraction methods are used in which the addition and subtraction signals are obtained in the both sign component extracting means 7a. However, in the both sign component extracting means 7a, as shown in Fig. 8(h), a multiplying method can be used for obtaining one symbol multiplying result obtained by multiplying a signal and a signal delayed by one symbol together. In the multiplying method, because "1" and "0" of the symbols correspond to positive and negative values of the one symbol multiplying result, "1" and "0" of the symbols can be discriminated. As a result a thick line in Fig. 8(h) can be handled as the MSK code. To obtain the signal represented by the thick line, an MSK signal and a one-symbol delayed MSK signal are multiplied together to obtain a moving average (over about 18 prior and post samples).

Further, in the MSK signal code decoding apparatus 1, use of a circuit for extracting the signal of the symbol of "1" (delaying and adding means 71) and a circuit for extracting a signal of the symbol of "0" (delaying and subtracting means 72) in the both sign component extracting means 7a makes the discriminating easier and stronger against noise than the case using only one circuit because the discrimination of the symbol is not made using only uncertain amplitudes, which makes the threshold zero for a reference of discrimination between the symbol of "1" and "0", which is clear.

Returning to Fig. 1, will be continued the description of the structure of the MSK signal code decoding apparatus 1.
The code discriminating means 11 discriminates the symbol between "1" and "0" from the MSK code and is outputted as decoded code to the code confirming means 13, the code correction component extracting means 15, and code outputting means 17. In the code discriminating means 11, if no noise is included in the input MSK code, i.e., no noise is included in the original LMSK signal, the symbol can be discriminated between "1" and "0" corresponding to positive and negative of the MSK code.

On the other hand, in a case where noise is included in the input MSK code, the code discriminating means 11 cannot discriminate the symbol between "1" and "0", corresponding to positive and negative of the MSK code.
Then, after obtaining code discriminating points for distinguish the symbol between "1" and "0" on the basis of a symbol clock outputted by the symbol clock extracting means 9, the code discriminating means 11 discriminates the symbol between "1" and "0" with the code discriminating points. The code discriminating point is a middle point between a rising edge of the symbol clock (or falling edge) and the rising (or falling edge) of the next symbol clock.

The code discriminating means 11 discriminates between positive and negative of the MSK code using the code discriminating points to determine whether the symbol is "1" or "0". Further, in a case where the signal includes much noise (in a case where the code discriminating point is unclear), the code discriminating means 11 performs averaging between symbol clocks and makes a code discrimination between "1" and "0" of the symbol with the average.

The code discriminating means 11 divides an interval of one symbol into several blocks to discriminate the symbol between "1" and "0" (blocking process). For example, if it is assumed that one symbol corresponds to 90 samples, the code discriminating means 11 forms one block with ten samples corresponding to a half cycle of 72 kHz, and obtains an average of sum of the ten samples (no averaging is necessary to code judgment) to determine a value of the block. Then, nine blocks are made for the interval of one symbol. This is equivalent to decrease in the number of the sampling points. To discriminate the symbol between "1" and "0", the code discriminating means 11 can make the code discrimination by comparing the number of positive sums with the number of negative sums within the nine blocks and using the side including a higher value of sums. The blocking process mentioned above provides code discrimination with a high accuracy because the operation process necessary for discriminating the symbol is made simple.

Returning to Fig. 1, will be continued the description of the structure of the MSK signal code decoding apparatus 1.
The code confirming means 13 judges whether the decoded code outputted by the code discriminating means 11 is correct or incorrect. When determining that the decoded code is incorrect, the code confirming means 13 generates a confirmed code obtained by correcting the decoded code and outputs the confirmed code to the code correction component extracting means 15 and code outputting means 17.

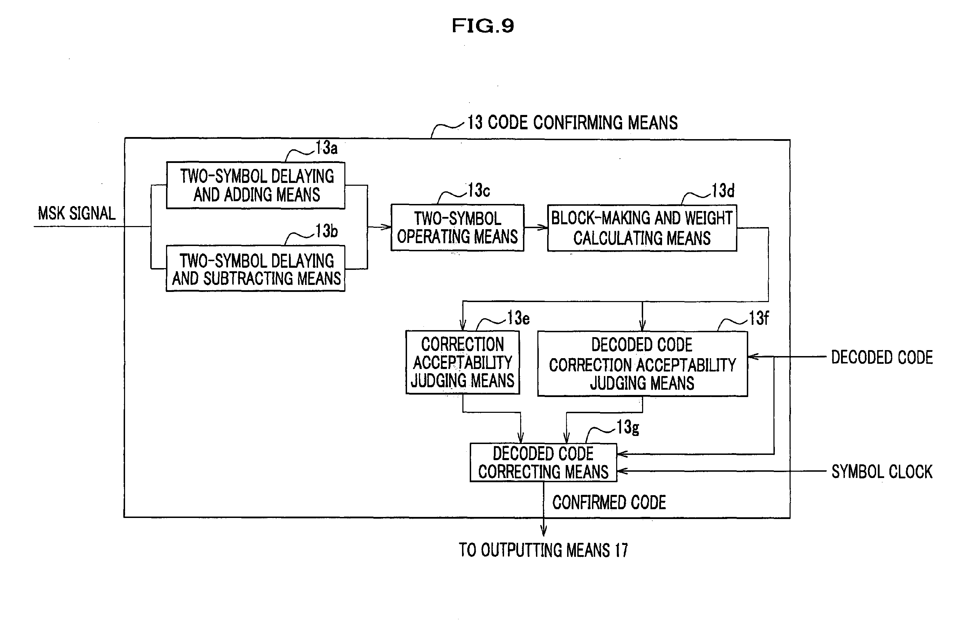

Fig. 9 shows a detailed structure of the code confirming means 13. As shown in Fig. 9, the code confirming means 13 includes a two-symbol delaying and adding means 13a, a two-symbol delaying and subtracting means 13b, a two-symbol operating means 13c, a block-making and weight calculating means 13d, a correction acceptability judging means 13e, a decoded code correction acceptability judging means 13f and a decoded code correction means 13g.
The two-symbol delaying and adding means 13a delays the input MSK signal by two symbols and adds the input MSK and the delayed MSK signal to output the addition result to the two symbol operating means 13c.
The two-symbol delaying and subtracting means 13b delays the input MSK signal by two symbols and makes subtraction between the input MSK and the delayed MSK signal to apply the subtraction result to the two symbol operating means 13c.

The two-symbol operating means 13c performs an operation process with the addition result coming from the two-symbol delaying and adding means 13a and the subtraction result coming from the two-symbol delaying and subtracting means 13b to obtain a consecutive MSK code (which is an MSK code obtained from consecutive two symbols having a positive value or a negative value). When the consecutive MSK code outputted by the two-symbol operating means 13c is positive, this case indicates that the consecutive symbols are identical ("11" or "00"). When the consecutive MSK code outputted by the two-symbol operating means 13c is negative, this case indicates that the consecutive symbols are different ("10" or "01").

The block-making and weight calculating means 13d divides the consecutive MSK codes outputted by the two-symbol operating means 13c to include a predetermined number of samples and calculates a weight in each block. Here, it is assumed that one symbol interval of the consecutive MSK code corresponds to 90 samples, and ten samples correspond to one block. Then, the block-making and weight calculating means 13d calculates weights at nine blocks for one symbol. Here, the weight in the block is obtained by determining whether each block is positive or negative and subtracting the number of blocks having a negative value from the number of blocks having a positive value. For example, in a case where out of nine blocks in one symbol, seven blocks have positive values and two blocks have negative values, an absolute of the result is seven. In a case where out of nine blocks in one symbol, six blocks have negative values and three blocks have positive values, an absolute of the result is six (weight is -3 because 3-6). Positive and negative of the values prior to obtaining the absolute values of weight correspond to "1" and "0" of the decoded code.

The calculation result of the block-making and weight calculating means 13d (the absolute value of the weights of blocks for one symbol) is supplied to the correction acceptability judging means 13e and the decoded code correction acceptability judging means 13f.

The correction acceptability judging means 13e supplies, to the decoded code correcting means 13g, a control signal indicating acceptability in correcting blocks having different positive and negative signs in a case where the absolute value as the calculation result calculated by the block-making and weight calculating means 13d is equal to or greater than a predetermined value (here, out of nine blocks seven blocks are positive or negative, i.e., the absolute value is equal to or greater than seven). Further, in a case where the absolute value as the calculation result calculated by the block-making and weight calculating means 13d is smaller than the predetermined value (smaller than seven of the absolute value), the correction acceptability judging means 13e supplies a control signal indicating that the correction of the blocks having different positive and negative signs is not accepted to the decoded code correcting means 13g.

In a case where the absolute value as the calculation result calculated by the block-making and weight calculating means 13d is smaller than or equal to the predetermined value (here, five blocks are positive or negative out of nine blocks for one symbol, i.e., smaller than five of the absolute value), the decoded code correction acceptability judging means 13f supplies, to the decoded code correction means 13g, a control signal indicating that the correction of the blocked decoded codes is allowed. Further, the decoded code correction acceptability judging means 13f supplies a control signal, indicating that correction of the decoded codes blocked is not accepted, to the decoded code correcting means 13g in a case where the absolute value as the calculation result calculated by the block-making and weight calculating means 13d is greater than the predetermined value (greater than the absolute value of five).

The decoded code correcting means 13g outputs a confirmed code which is a corrected decoded code in a case where the control signal outputted by the correction acceptability judging means 13e indicates that correction of the blocks having different positive and negative codes is accepted and the control signal outputted by the decoded code correction acceptability judging means 13f indicates that correction of the decoded codes blocked is accepted.

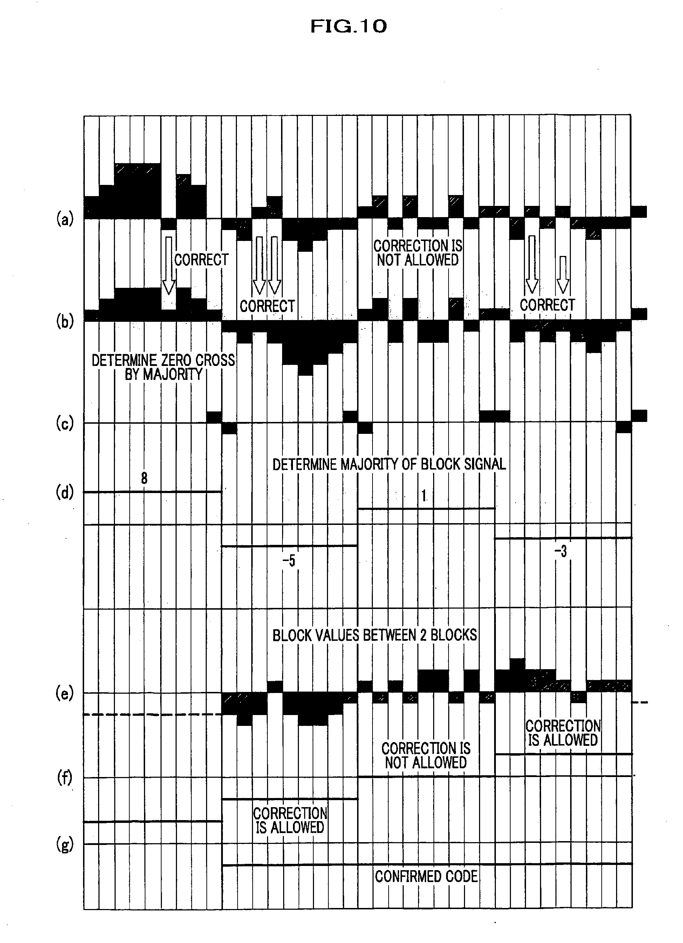

With reference to Fig. 10 will be described a process in the block-making and weight calculating means 13d.
Fig. 10(a) shows values of respective blocks. When Fig. 10(a) is checked for each one symbol interval (for each nine blocks), there is one or two blocks having different signs from each other. These blocks having values of different signs are clearly judged to be incorrect. In this case, as shown in Fig. 10(b), the code having difference in sign are inverted. However, in a case where there are four or more blocks having different positive and negative blocks, the correction is not allowed, and thus, inversion is not performed.

Obtaining zero cross points with the blocks corrected as shown in Fig. 10(b) provides extraction of the symbol clock. In other words, dividing the consecutive MSK codes with the block-making and weight calculating means 13d absorbs dispersion of errors, so that an accuracy in extracting the symbol clock through blocking is high. Thus, this fact indicates the blocking has a large effect.

Fig. 10(c) shows an example where there are zero crosses at points of symbol clock.
Fig. 10(d) shows values resulting from obtaining the number of the blocks having positive values and the number of the blocks having negative values and making subtraction between these numbers. The value is used for correcting codes as weight.
Fig. 10(e) shows an operation result between two symbols.
Fig. 10(f) shows an operation result of judgment made from weights whether the consecutive MSK code can be corrected. Here, the correction of the consecutive MSK code is judged to be acceptable in a case where an absolute value of weight is equal to or greater than three as shown in Fig. 10(f).
Fig. 10(g) shows the code corrected in Fig. 10(g) (confirmed code).

As described, the block-making and weight calculating means 13d divides a symbol interval into blocks to make the judgment, which is relatively simple and has a great effect. If it is assumed that a weighting process mentioned above is performed without block-making, equalizing the number of the blocks to that of the samples, i.e., making the number of samples to be united in a block one, provides a similar weighting process.

Returning to Fig. 1, will be continued the description of the structure of the MSK signal code decoding apparatus 1.
The code correction component extracting means 15 reproduces a reproduction MSK signal from the decoded code, comparing it with the MSK signal to detect incorrect codes to perform code correction, applying a resultant corrected code to the code outputting means 17. The code correction component extracting means 15 includes an MSK signal storing means 15a, a reference code generating means 15b, an input selecting means 15c, a reference MSK signal generating means 15d, a carrier phase extracting means 15e, an MSK signal reproducing means 15f, a multiplication averaging means 15g, a code correcting means 15h, and a re-processing judging means 15i.

The MSK signal storing means 15a stores samples of MSK signal outputted by the amplitude adjusting means 5 in which the number is determined in accordance with necessity. The output from the MSK signal storing means 15a is referred to as a stored MSK signal. The stored MSK signal is named to be discriminated from the MSK signal because the stored MSK signal has a signal format identical with the input MSK signal, but has delay by an interval of storing.

The reference code generating means 15b generates a reference code having a pattern in which symbols of 1" and "0" alternately occur to apply the generated reference code to the input selecting means 15c and the reference MSK signal generating means 15d.

The input selecting means 15c selects one of the decoded code outputted by the code discriminating means 11, the confirmed code outputted by the code confirming means 13, and the reference code outputted by the reference code generating means 15b on the basis of an operation signal as a result of an initial setting or as a result of an operation with operating means (not shown) by a user of the apparatus 1 to input the selected one into the MSK signal reproducing means 15f. The initial setting sets a priority of the code to be selected. Here, the priority is set to have an order of the reference code, the confirmed code, and decoded code. More specifically, in a case where the reference code is inputted into the input selecting means 15c, the reference code is selected, in a case where the reference code is not applied, but the confirmed code is applied, the confirmed code is selected, and in a case where the reference code and the confirmed code are not inputted, the decoded code is selected.

The reference MSK signal generating means 15d generates the reference MSK signal on the basis of the reference code generated by the reference code generating means 15b to supply it to the carrier phase extracting means 15e.

The carrier phase extracting means 15e extracts a carrier phase (carrier clock) of the stored MSK signal outputted by the MSK signal storing means 15a. The carrier phase is used as a reference for matching a phase while the MSK signal reproducing means 15f reproduces the reproduction MSK signal. Because the carrier is out of phase, this influences the following process in accuracy, it is necessary to extract the carrier phase as accurate as possible.

Will be described extraction of the carrier clock in the carrier phase extracting means 15e using specific values. For example, if it is assumed that the MSK signal is sampled at 1440 kHz, there are 90 samples for one symbol interval. For one symbol interval, there are 18 samples corresponding to one cycle of 80 kHz (90 samples correspond to five periods [5 cycles]), and there are 20 samples corresponding to one cycle of 80 kHz (90 samples corresponds to 4.5 periods [4.5 cycles]). The MSK signal passes through a zero point for each half of the MSK signal (every time nine samples or ten samples).

More specifically, in a case of 80 kHz, if a start point of the 80 kHz is defined as a start point of the samples (sample point of "0"), samples of 0, 9,18, 27, 36, ··· and, 90 correspond to zero points. Further, in a case of 72 kHz, if a start point of the 72 kHz is defined as a start point of the samples (sample point of "0"), samples of 0, 9, 18, 27, 36, ··· and, 90 correspond to zero points. Thus, whichever the symbol is "1" or "0", the MSK signal is always at a zero point at samples of 0, 90, 180, 270, and 360.

It is possible to extract the carrier clock using this property. More specifically, thousands of samples of the stored MSK signal are folded and overlapped (summed) every 90 samples. A point where most samples are concentrated is regard as the carrier clock.

Expressing this property with an equation, the zero cross points at 80 kHz are given by (A + 9 × N), and the zero cross points at 72 kHz are given by (B+ 10 ×M), where A, N, B, and M are integers. Then, at the zero cross point of the carrier clock, a relationship of (A + 9 × N = B + 10 × M) is established.

The carrier phase extracting means 15e multiplies the stored MSK signal outputted by the MSK signal storing means 15a and the reference MSK signal generated by the reference MSK signal generating means 15d together, and during this, the reference MSK signal is shifted to obtain a shift quantity providing maximum amplitude to obtain the carrier phase. In other words, the shift quantity providing the maximum amplitude is determined as the carrier phase. This method enables extraction of the carrier phase (carrier clock) with a high accuracy.

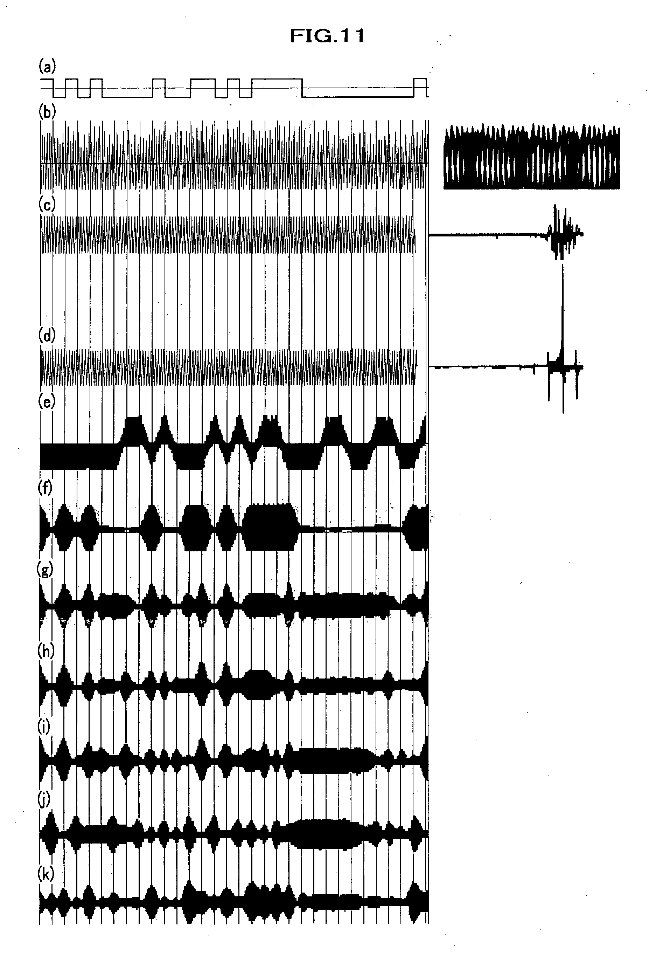

With reference to Fig. 11 will be described more specifically, the extraction of the carrier phase (carrier clock) by the carrier phase extracting means 15e.
The stored MSK signal which is derived by adjusting the amplitude of the LMSK signal inputted into the MSK signal code decoding apparatus 1 is referred to as MSK_S[i]. MSK_S[i] denotes an i^{th} sample value. If it is assumed that one symbol interval is sampled at 90 sampling points, 90 sample points show one waveform of the LMSK signal. The number of the sampling points may be greater than 90. If it is assumed that the reference MSK signal is referred to as MSK_S[i], the MSK signal code decoding apparatus 1 executes a process described below.

Multiplying MSK_S[i] by MSK_S[i] provides extraction of the carrier clock. If it is assumed that Multiplication result is A[i], A[i] = MSK_S[i]×MSK_R[i] is given. If it is assumed that N represents a length of the reference MSK signal, i.e., the number of data pieces (an integer times the sampling points), S[J]=Σ fabs(MSK_S[i+J] × MSK_R[i]). In the equation, Σ represents a sum of i = 0 to N, and fabs represents an absolute value. Further, because there are 90 samples points, N is a number which is an integer times 90, i.e., 90, 180, 270, 360, ···. Will be studied cases where the value of N is 90, 180, 270, and 360.

Here, Fig. 11(a) shows a digital code (symbol). Fig. 11(b) shows a waveform of the LMSK signal. Fig. 11C shows a waveform of the stored MSK signal of the LMSK signal subject to the amplitude adjustment. Fig. 11(d) shows a reproduced MSK signal. Fig. 11(e) shows a waveform of the reproduced MSK signal. Fig. 11(e) shows a waveform obtained by multiplying the above-mentioned two signals. Fig. 11(f) shows a waveform of multiplication sum of one symbol (80 kHz). Fig. 11(g) shows a waveform of a multiplication sum of two symbols (80 kHz and 72 kHz). Fig. 11(h) shows a waveform of multiplication sum of three symbols (80 kHz, 72 kHz, and 80 kHz). Fig. 11(i) shows a waveform of a multiplication sum of four symbols (80, 72, 80, and 72 kHz). Fig. 11(j) shows a waveform of a multiplication sum of one symbol (72 kHz). Fig. 11(k) shows a waveform of a multiplication sum of one symbol (80 kHz + 72 kHz).

A result of the simulation of N (360 points) is shown in Figs. 11(f) to 11(k). Thus, the carrier clock can be obtained only by obtaining J phase that becomes the maximum up to the sample points of 0 to 89 regarding S[J]. The carrier clock can be obtained simply at the waveform of multiplication sum having the maximum among N points. However, this may be incorrect in accordance with the input MSK signal. Accordingly, because S[J] becomes the maximum every 90 samples, i.e., at clock point (carrier clock point), the value at that point is defined as R[K]. K is defined as K= 0 to 89. Then, R[K]=ΣS[J]. Then, for example, when K = 0, R[K] can be obtained by a summation, i.e., R[K]=S[0]+S[90]+S[180]+S[270]+S[360]. Further, when K = 1, R[K] can be obtained by a summation, i.e., R[K]=S[1]+S[91]+S[181]+S[271]. Then, K represents a carrier clock point having a maximum of R[K].

In addition, only by using this method, there may be a case that the carrier clock is inaccurately extracted. Generally, to extract the carrier clock, it is known that the more changing points between positive and negative signs are used, the more accuracy is increased. Then, the carrier clock can be improved in accuracy by adopting processing only S[J] having clear maximum or minimum which are extracted from S[J] or by a method of using only values which are more than 1.5 times an average of S[J].

Further, according to the input MSK, to extract the carrier clock, there may be a case where MSK patterns (reference MSK code, a pattern of MSK[i]) are changed. In other words, if the MSK pattern is totally identical with MSK_S[i], in which case there are few changing points between positive and negative signs, this case is not preferable. Thus, to extract the carrier clock, using only portions of the waveform where A[i] changes can lower error in the extracted carrier clock.

Further, when there are a lot of changing points between positive and negative signs, in which case a change in amplitude occurs when A[i] varies from positive to negative or negative to positive, the carrier clock is more accurately extracted. In contrast, when there are few changing points between positive and negative signs, in which case A[i] becomes flat, the extraction of the carrier clock becomes difficult (the carrier clock point becomes unclear)..

Further, if it is assumed that there are 90 sample points between an interval of one symbol, the carrier clock can be extracted by using the fact that there is a maximum or a minimum at 45 sampling points which is a half of 90 sampling points. Further, if it is assumed that N (90 sampling points × 1) = 90 samples, i.e., 90 sampling points for one symbol, the MSK signal may be a single signal of either signal 80 kHz or 72 kHz. However, if it is assumed that N (90 sampling points × 2) = 180 samples, i.e., 180 sampling points for one symbol, frequency characteristics of two signals of 80 kHz or 72 kHz can be used for extracting the carrier clock.

To perform decoding the symbol more accurately against noise, it is preferable that samples are many to some extent. However, because extraction of the carrier clock needs a calculation time interval, it is important to select the number of samples in accordance with the scale of the apparatus.

Based on the above, Figs. 11(f) to 11(k) are compared. Figs. 11(f) to 11(k) are provided to compare four cases where the number of samples of the reference MSK signal are 90, 180, 270, and 360 to extract the carrier phase. Fig. 11(f) shows a waveform of the multiplication sum of the MSK [i] which is provided by modulating with a single frequency of 80 kHz when the symbol is "1".

Fig. 11(g) shows a waveform of the multiplication sum of the MSK [i] which is provided by modulating with frequencies of 80 kHz and 72 kHz when N = 180, and the symbol is "10". Fig. 11(g) shows the first 90 samples show a waveform of the MSK [i] which is provided by modulating with 80 kHz and the latter 90 samples show a waveform of the MSK [i] which is provided by modulating with 72 kHz.

Comparing Fig. 11(f) with Fig. 11 (g) results in that although a length is short, the waveform shown in Fig. 11(f) shows maximum or minimum points continuously occur, wherein peaks are clear. In contrast, Fig. 11 (g) shows that the waveform has three steps of height in amplitude, so that peaks are rather unclear, and there are changes in the waveform even at portions where there is no variation in the symbol.
As a result, the case of Fig. 11(g) is suited for extracting the carrier clock because there are many changes in waveform shape.

Further, Fig. 11(h) and Fig. 11(i) show cases where the MSK pattern is elongated. More specifically, Fig. 11(h) shows a waveform of the multiplication sum in the case where the MSK pattern includes three symbols.
Fig. 11(i) shows a waveform of the multiplication sum in the case where the MSK pattern includes four symbols. Further, Fig. 11(j) shows a waveform of the multiplication sum in the case where only the signal of 72 kHz indicating the symbol of "0" is used.

Fig. 11(k) shows a case where Figs. 11(f) and 11(j) are summed, i.e., a multiplication sum of the MSK signals derived by modulating LMS_R[i] by 80 kHz and 72 kHz. This is more suitable for extracting the carrier clock than the waveforms of Figs. 11(f) and 11(j) because there are many changes in the waveforms shown in Fig. 11(f) and 11(j).

In another method of extracting the carrier clock, the MSK signal inputted into the MSK signal code decoding apparatus 1 is multiplied by the MSK signals modulated at 80 kHz and 72 kHz, respectively. Then, the waveform as the multiplication result has no change in envelope when the phases are identical. However, when the phases are different from each other, a polarity of the envelope is inverted. Using this characteristic provides extraction of the carrier clock. For example, to extract the carrier clock by the carrier phase extracting means 15e, using the symbol clock extracted by the symbol clock extracting means 7 provides a more accurate carrier clock extraction.

Returning to Fig. 1, will be described the description of the structure of the MSK signal code decoding apparatus 1.
The MSK signal reproducing means 15f generates a reproduced MSK signal on the basis of the decoded code or the confirmed code which are inputted via the input selecting means 15c More specifically, when the input selection means 15c selects one of the decoded code outputted by the code discriminating means 11 or the confirmed code obtained by the code confirming means 13, in the reproduced MSK signal, modulation of the MSK is carried out on the basis of the carrier clock extracted by the carrier phase extracting means 15e. Further, it is natural that the phase of the carrier clock is also in phase with the symbol clock.

The multiplication averaging means 15g multiplies the stored MSK signal outputted by the MSK signal storing means 15a with the reproduced MSK signal outputted by the MSK signal reproducing means 15f and performing an averaging process to generate a verification code.

The code correction means 15h checks whether the decoded code outputted by the code discriminating means 11 is accurate or not with a verification code outputted by the multiplication averaging means 15g. When the decoded code is determined to be inaccurate, the decoded code is inverted to correct the code.

When the code correction of the decoded code is performed at the code correction means 15h, a re-processing judging means 15i judges whether a re-processing should be performed (re-processing judgment). If the re-processing is necessary (in a case where the judging result indicates that the re-processing is allowed), the re-processing judging means 15i supplies the codes obtained by correcting the decoded code by the code correcting means 15h to the MSK signal reproducing means 15f as a modified code. Further, if the re-processing is unnecessary (the judging result shows that the re-processing is not allowed), the re-processing judging means 15i supplies the code obtained by correcting the decoded code by the code correcting means 15h to the code outputting means 17 as a corrected code.

Further, the MSK signal reproducing means 15f outputs a new reproduced MSK signal by performing the same process with the corrected code in place of the reference code, the confirmed code, or the decoded code.
Further, in the re-processing judgment of the re-processing judging means, the re-processing is unnecessary (in a case where the judging result indicates that the re-processing is not allowed), i.e., the code correction is all finished, all the verification codes as an output of the multiplication averaging means 15g are positive.

However, the verification code as the output of the multiplication averaging means 15g may partially have a negative value due to effect of noise. However, when determining that a further correction of the code is regarded to be impossible, the re-processing judging means 15i supplies the corrected code to the code outputting means 17 without returning to the MSK signal reproducing means 15f.

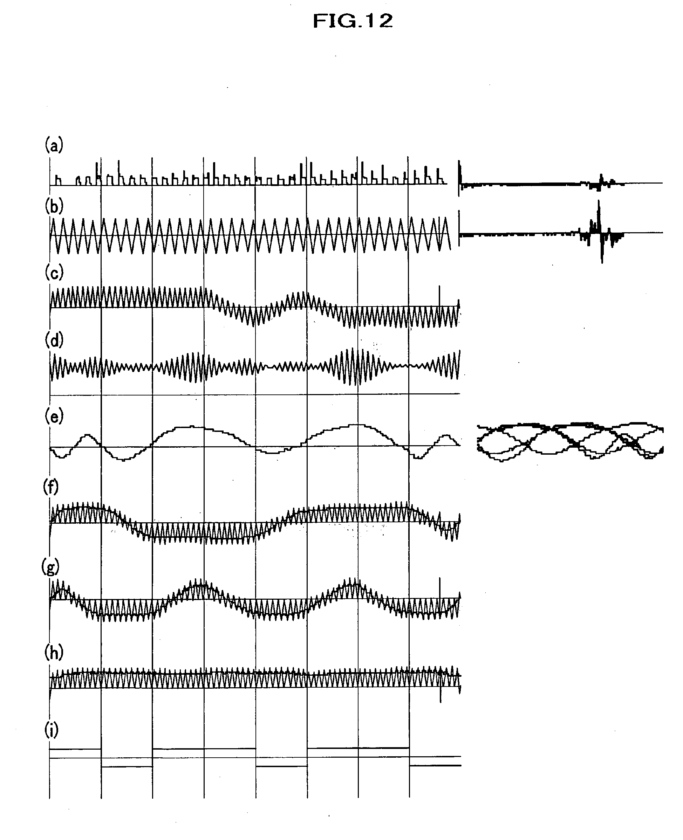

With reference to Fig. 12, will be described a change (transition) in the waveform from when the LMSK signal is inputted into the MSK signal code decoding apparatus 1 to when the symbol of the MSK signal is corrected by the code correcting means 15h. Further, in Fig. 12, vertical lines indicate positions of the symbol clock (symbol clock points).

Fig. 12(a) shows input data which is an origin of the input LMSK signal and which is sampled at 2,880 kHz and shows a waveform subject to L-MSK modulation (LMSK modulation). Further, the input data is obtained from a signal receiving a radio wave broadcast by FM multiplexed broadcast station of VICS Tokyo.
Fig. 12(b) shows a waveform of LMSK signal having 76 kHz ± 12 kHz obtained by passing the input data shown in Fig. 12(a) through a band-pass filter.

Fig. 12(c) shows a waveform obtained by multiplying the stored MSK signal shown in Fig. 12(b) (the stored MSK signal the reference MSK signal) and a waveform of the reference MSK signal together which is derived by modulating a symbol in which symbols of "1" and "0" alternate. Here, the MSK signal is modulated by 80 kHz and 72 kHz. In Fig. 12(c), because the stored MSK signal is in phase with the reference MSK signal, the amplitude becomes large. When they are out of phase, the amplitude becomes small, so that the code processing is difficult.

Fig. 12(d) shows a waveform obtained by adding (obtaining sum of) portions of four symbols, wherein an amplitude become maximum approximately at symbol clock points. This is a waveform corresponding to the R[K].
Fig. 12(e) shows a waveform obtained by delaying and detecting the waveform shown in Fig. 12(b) and smoothing the delayed and detected waveform (for comparison).

Fig. 12(f) shows a waveform obtained by multiplying the waveform shown in Fig. 12(b) with a signal modulated at the frequency of 80 kHz. Fig. 12(g) shows a waveform obtained by multiplying the waveform shown in Fig. 12(b) with a signal modulated by a frequency of 72 kHz. In these drawings, symbol values are different from each other at portions where values changes from positive to negative or negative to positive. More specifically, in Fig. 12(f), the different portion indicates not a symbol of "1", but a symbol of "0". In Fig. 12(g), the different portion indicates not a symbol of "0", but a symbol of "1". The waveforms shown in Figs. 12(f) and 12(g) are verification codes inputted into the code correcting means 15h from the multiplying and averaging means 15g.

Fig. 12(h) shows a waveform obtained by multiplying the stored MSK signal and the reference MSK signal together which is generated from waveforms shown in Fig. 12(f) and Fig. 12(f) in which symbols having different signs are corrected. The result shows that Fig. 12(h) is corrected to have positive amplitudes. Fig. 12(i) shows a waveform of the decoded digital code (symbol).

As shown in Figs. 12(f) and 12(g), the verification code outputted by the multiplication averaging means 15g includes a portion in which a value is changed from positive to negative or negative to positive. Then, the code correcting means 15h makes correction by inverting the sign at this portion, in which the portion is regarded as a part including an error in sign. Further, in the code correcting means 15h, in a case where correction of the code is unnecessary, i.e., the code correction is finished, the waveform becomes that shown in Fig. 12(h). However, if noise is included in the input MSK signal inputted into the code correction component extracting means 15 of the MSK signal code decoding apparatus 1, there is a portion having a negative value due to effect of the noise. In this case, it is sufficient to correct the code with the code correcting means 15h to make the portion having a positive value maximum.

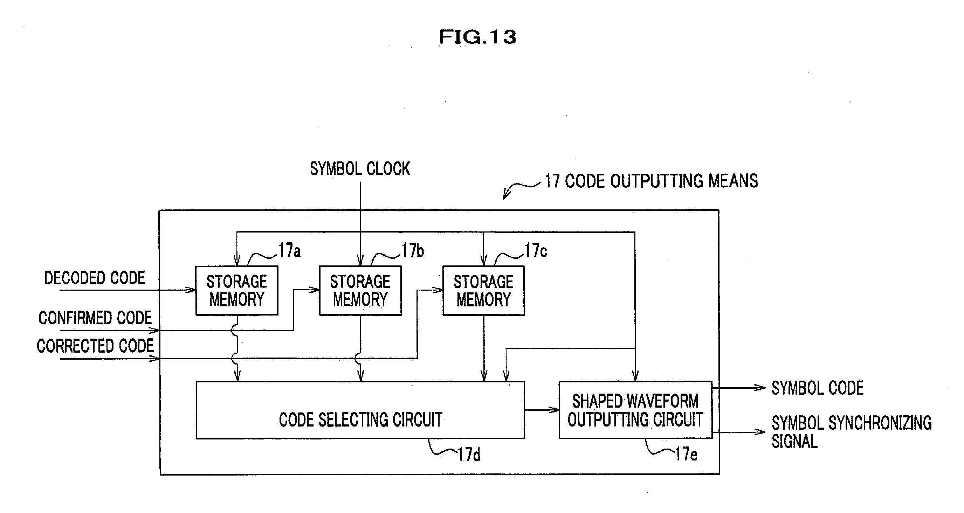

Returning to Fig. 1, will be continued the description of the structure of the MSK signal code decoding apparatus 1.
The code outputting means 17, supplied with the decoded code from the code discriminating means 11, the confirmed code from the code confirming means 13, the corrected code from the code correction component extracting means 15, the symbol clock from the symbol clock extracting means 15, selects either one of the decoded code, the confirmed code, or the corrected code to output the symbols in which "1" and "0" accurately wave-shaped are consecutively outputted. A detailed structure of the code outputting means 17 is shown in Fig. 13.

In the code outputting means 17, a priority is set to select either of the decoded code, the confirmed code, or the corrected code. The priority is set to have an order of the corrected code, the confirmed code, and the decoded code. Further, each of codes supplied to the code outputting means 17 includes three values including positive and negative values and zero which indicates invalidation.

As shown in Fig. 13, the code outputting means 17 includes a storage memory 17a for storing the decoded code, a storage memory 17b for storing the confirmed code, a storage memory 17c for storing the corrected codes, a code selecting circuit 17d for selecting either of the corrected code, the, confirmed code, or the decoded code in accordance with the priority, and a shaped waveform outputting circuit 17e for waveform-shaping the sleeted code.

Further, the storage memories 17a, 17b, and 17c, the code selecting circuit 17d, and the shaped waveform outputting circuit 17e are supplied with the symbol clock extracted by the symbol clock extracting means 9 in which, on the basis of the symbol clock, each of codes (the corrected code, the confirmed code, and the decoded code) are stored and selected, respectively, and a waveform of each code is shaped.

The code outputting means 17 selects each code in accordance with the priority. More specifically, first when the corrected code is not zero, the corrected code is selected. Further if the corrected code is zero and the confirmed code is not zero, the confirmed code is selected. Further, both the corrected code and the confirmed code are zero, the decoded code is selected. When a value of the selected code is positive, the symbol of "1" is outputted, when the value of the selected code is negative, the symbol of "0" is outputted, and when the value of the selected code is zero, the symbol of "0" is outputted.

Further, input timings of each of code into the code outputting means 17 are not simultaneous, wherein the input timing of the corrected code is latest. Although the delay of the input timings of the corrected code depends on the processing method in the code correcting means 15h, it is about three or two symbols. The code outputting means 17 stores and delays decoded codes for at least three symbols in the storage memory 17a and the confirmed codes for at least three symbols in the storage memory 17b to process respective codes at the same timing so as to recover the delay of about three or two symbols by delaying. The code outputting means 17 continuously select each code without loss of continuity, outputting accurate symbols and codes.

As shown in Fig. 1, according to the MSK signal code decoding apparatus 1, the delaying and adding means 71 in the both sign component extracting means 7a delays the MSK signal of which amplitude is adjusted and adds the delayed MSK signal to the MSK signal which is prior to delaying, i.e., the post-inputted MSK signal. The delaying and subtracting means 72 in the both sign component extracting means 7a performs subtraction as well as the operating means 7b obtains the difference. The code discriminating means 11 discriminates the decoded code on the basis of the difference (it there is no error, the code outputting means 17 outputs the discrimination result as a symbol). Accordingly, occurrence of errors in the decoded symbol can be prevented even at places where the signal level rapidly varies, or even at places to which noise, reflection waves or interference waves come, i.e., even in a noisy transmission path.

Further, according to the MSK signal code decoding apparatus 1, the code confirming means 13 corrects the decoded code using a characteristic of the consecutive symbols, so that if one symbol of the decoded code is incorrect due to the effect of noise, the code can be changed to the corrected code.

Further, according to the MSK signal code decoding apparatus 1, the code correction component extracting means 15 uses more MSK signals so as to obtain more accurate symbols. The multiplication averaging means 15g generates the verification code to detect an error in code. When there is an error, the code correcting means 15h inverts the symbol to output the corrected code. The correction is made over a plurality of symbols, further increasing an effect in the code correction. The above means can prevent occurrence of errors in the decoded symbol even though there is a rapid variation of the signal level, or even at a place to which noise, reflection waves or interference waves come, i.e., even in a noisy transmission path.

Further, according to the MSK signal code decoding apparatus 1, the symbol is outputted by selecting one of the decoded code, the confirmed code, and the corrected code which are features of the MSK signal code decoding apparatus 1. The decoded code can be outputted by a smallest structure within the MSK signal code decoding apparatus 1 with a noise (noise) resistance. Further, the confirmed code has such a feature that an error can be corrected when an instantaneous noise is caused to be included in the decoded code. Further, the corrected code has such a feature that while the carrier phase can be extracted, an error in the symbol is most prevented.

### <Operation of MSK Signal Code Decoding Apparatus: Part 1>

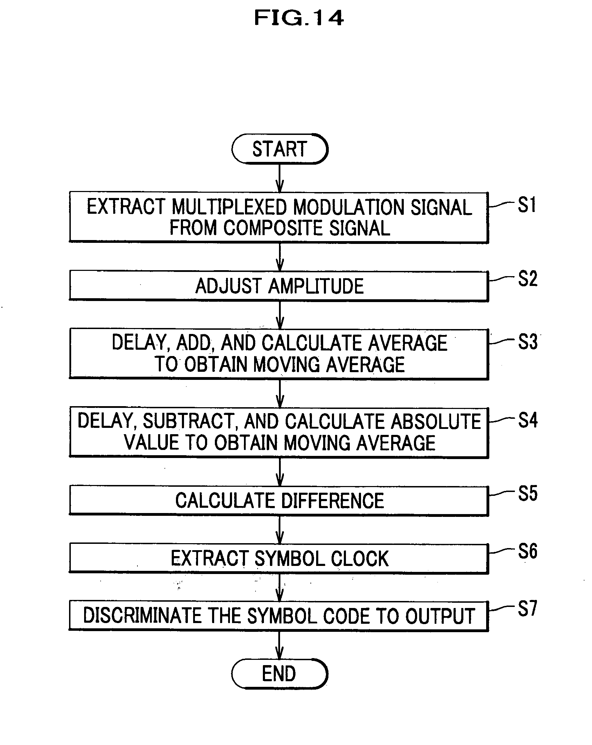

Next, with reference to a flowchart, shown in Fig 14, illustrating a general decoding of symbols (in a case where the symbol is decoded without intervening to the code correction component extracting means 15), will be described an operation of the MSK signal code decoding apparatus (occasionally Fig. 1 is referred).
First, in the MSK signal code decoding apparatus 1, the multiplexed modulation signal extracting means 3 extracts the multiplexed modulation signal from the composite signal (step S1). After that, in the MSK signal code decoding apparatus 1, the amplitude adjusting means 5 adjusts the amplitude of the multiplexed modulation signal to provide an MSK signal (step S2).

In the MSK signal code decoding apparatus 1, the delaying and adding means 71 in the both sign component extracting means 7a in the code component extracting means 7 delays and adds the MSK signal to the delayed MSK signal, and obtains a moving average by determining an absolute value (step S3). The delaying and subtracting means 72 in the both sign component extracting means 7a in the code component extracting means 7 delays the MSK signal and performs subtraction and obtains the moving average by determining the absolute value (step S4). The steps S3 and S4 are shown with consecutive steps for simplification, but are actually conducted in parallel.

In the MSK signal code decoding apparatus 1, the operating means 7b in the code component extracting means 7 calculates the difference between the addition signal obtained by addition in the delaying and adding means 71 and the subtraction signal by subtraction in the delaying and subtracting means 72 (step S5). The symbol clock is extracted from the difference (MSK code) (step S6). The code discriminating means 13 reproduces (decodes) a decoded code from the MSK code (step S7).

### <Operation of MSK Signal Code Decoding Apparatus: Part 2>

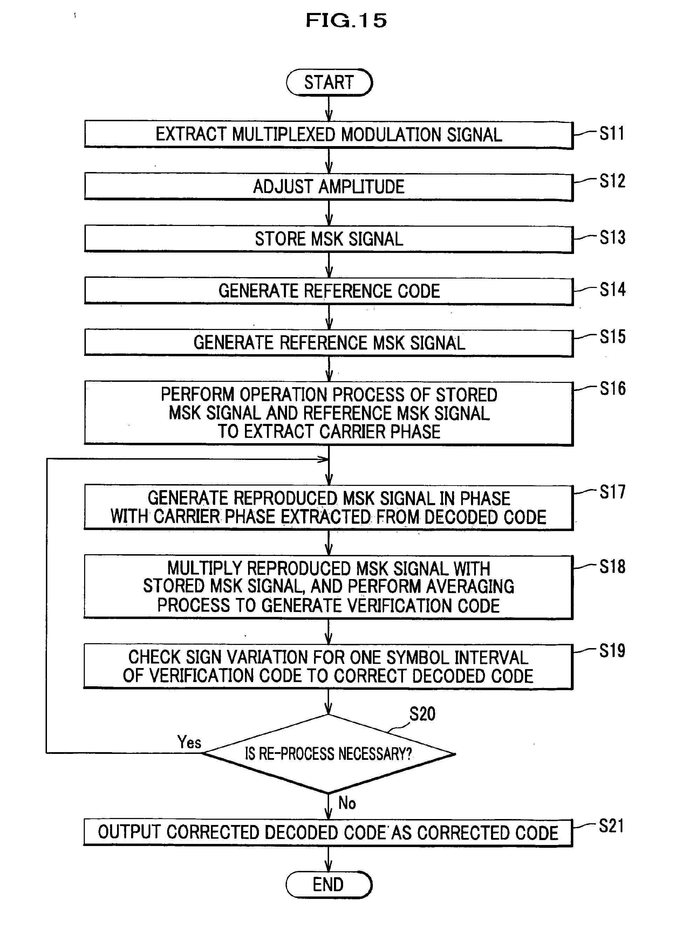

Next, with reference to a flow chart of the corrected decoded code of the symbol shown in Fig. 15 (in a case where the symbol is decoded through the' code correction component extracting means), will be described an operation of the MSIC signal code decoding apparatus 1 (occasionally Fig. 1 is referred).
First, in the MSK signal code decoding apparatus 1, the multiplexed modulation signal extracting means 3 extracts the multiplexed modulation signal (step S11). The amplitude adjusting means 5 outputs an amplitude-adjusted MSK signal (step S12). Next, the MSK signal code decoding apparatus 1 stores the MSK signal in the MSK signal storing means 15a in the code correction component extracting means 15 (step S13).

Further, in the MSK signal code decoding apparatus 1, the reference code generating means 15b in the code correction component extracting means 15 generates the reference code (step S14). The reference MSK signal generating means 15d in the code correction component extracting means 15 generates the reference MSK signal (step S15). Next, in the MSK signal code decoding apparatus 1, the carrier phase extracting means 15e extracts the carrier phase (a phase of the carrier clock) by an operation process with the stored MSK signal and the reference MSK signal (step S16).

In the MSK signal code decoding apparatus 1, the MSK signal reproducing means 15f in the code correction component extracting means 15 generates the reproduced MSK signal which is in phase with the carrier phase extracted by the carrier phase extracting means 15e with the decoded code supplied through the input selecting means 15c (step S17). Further in the MSK signal code decoding apparatus 1, the multiplication averaging means 15g in the code correction component extracting means 15 multiplies the reproduced MSK signal generated by the MSK signal reproducing means 15f by the stored MSK signal outputted by the MSK signal storing means 15a and performs the averaging process to generate the verification code (step S18).

Next, in the MSK signal code decoding apparatus 1, the code correcting means 15h checks a variation in sign in the verification code within one symbol interval to correct the decoded code (step S19). Next, in the MSK signal code decoding apparatus 1, the re-processing judging means 15i judges whether a re-process of the reproduced MSK signal is necessary or unnecessary (step S20). If the re-processing judging means 15i determines that the re-processing is necessary (Yes in the step S20), the processing returns to the step 517. Further, when determining in the step S20 that the reprocessing the MSK signal is unnecessary (No, in the step S20), the MSK signal code decoding apparatus 1 supplies the corrected decoded code as the corrected code to the code outputting means 17 (step S21). Further, in a case where the corrected code is inputted, the code outputting means 17 outputs the corrected code as the symbol with a first priority.

### <Operation of MSK Signal Code Decoding Apparatus: Part 3>

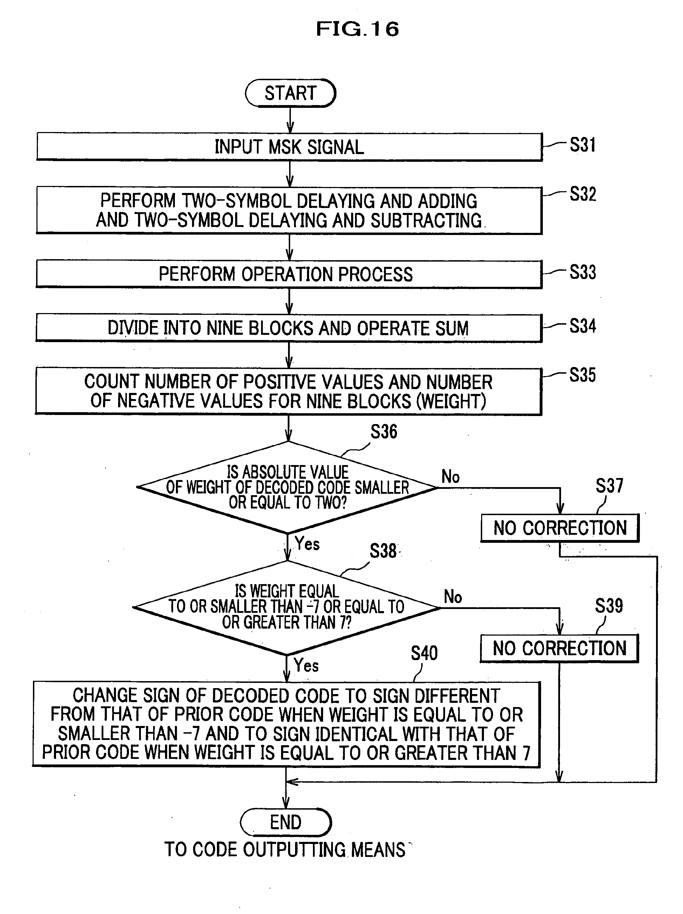

Next, with reference to a flowchart of outputting the confirmed code shown in Fig. 16 will be described an operation of the code confirming means 13 of the MSK signal code decoding apparatus 1 (occasionally, Figs. 1 and 9 are referred).
First, in the MSK signal cod decoding apparatus 1, the code confirming means 13 is supplied with the MSK signal (step S31), the two-symbol delaying and adding means 13a and the two-symbol delaying and subtracting means 13b perform addition and subtraction with a delay of two symbols (step S32). Here, the component obtained by delaying with two symbol intervals shows that the MSK codes are identical (see Fig. 7(f)). Further, the component obtained by delaying by two symbol interval and subtraction shows that the consecutive MSK codes are different (see Fig. 7 (g)).

In, the MSK signal code decoding apparatus 1, the two-symbol operating means 13c performs the operation process (step S33), i.e., performs the averaging process for the outputs of the two-symbol delaying and adding means 13a and the two-symbol delaying and subtracting means 13b to remove unnecessary components to reproduce the consecutive MSK codes having positive and negative amplitudes in accordance with the characteristic of the above-described symbol.

Next, in the MSK signal code decoding apparatus 1, the block-making and weight calculating means 13d divides the result of the operation process in the two-symbol operating means 13c into nine blocks for each one symbol interval and operates a sum of each of the nine blocks (step S34). Here, because it is assumed that one symbol interval includes 90 samples, ten samples correspond to one cycle of the second harmonic of 72 kHz. Further, the block-making and weight calculating means 13d averages the sums at each block. However, the averaging is not an essential process because the code discrimination of the decoded code.

Further, in the MSK signal code decoding apparatus 1, the block-making and weight calculating means 13d calculates the number of positive values and the number of negative values for nine blocks in one symbol interval and defines the difference as weight (step S35). For example, if the number of the positive value is seven, and the number of the negative values is two, the weight is five. The larger the absolute value of the weight is, the higher the efficiency of correcting the decoded code becomes.

Further, in the MSK signal code decoding apparatus 1, the decoded code correction acceptability judging means 13f judges whether the absolute value of the weight of the decoded code is smaller or equal to two (step S36). If the absolute value of the weight of the decoded code is not equal to or smaller than two (No, in the step S 36), the code confirming means 13 in the MSK signal code decoding apparatus 1 does not correct the decoded code (step S37).

Further, the MSK signal code decoding apparatus 1 determines that the absolute value of the weight of the decoded code is equal to or smaller than two, (Yes in the step S36), the correction acceptability judging means 13e judges whether the weight is equal to or smaller than -7 and equal to or greater than seven (step S38). When the correction acceptability judging means 13e determines that the weight is not equal to or smaller than -7 and equal to or greater than seven (No in the step S38), the code confirming means 13 in the MSK signal code decoding apparatus 1 does not correct the decoded code (step S39).

Further, when determining that the weight is equal to or smaller than -7 and equal to or greater than seven (Yes in the step S38), the MSK signal code decoding apparatus 1 outputs the confirmed code of which sign is changed to a sign different from that of the first decoded code when the weight is equal to or smaller than -7 and outputs the confirmed code of which sign is changed to a sign identical with that of the first decoded code when the weight is equal to or greater than seven (step S40).

As mentioned above, the embodiment of the present invention is described. However, the present invention is unlimited to the above-mentioned embodiment. For example, the embodiment is described with the MSK signal code decoding apparatus 1. However, this can be regarded as an MSK signal code decoding program described using a general or a special computer language for each process in the MSK signal code decoding apparatus 1. This provides an effect identical with that provided with the MSK signal code decoding apparatus 1.

## Claims

1. An MSK signal code decoding apparatus for decoding a symbol assigned to an MSK signal from an LMSK signal which is obtained by level control of the MSK signal which is modulated by an MSK based on a modulation method of DARC for an FM multiplexed broadcasting, **characterized by** comprising:
both sign component extracting means for extracting signals of "1" and "0" of the symbol from the MSK signal obtained by adjusting an amplitude of the input LMSK signal;
operating means for generating an MSK code obtained by removing at least a high frequency component from a signal extracted by the both sign code component extracting means;
symbol clock extracting means for extracting a symbol clock from the MSK code generated by the operating means;
code discriminating means for outputting a decoded code of which sign of the MSK code is discriminated between positive and negative on the basis of the symbol clock extracted by the symbol clock extracting means; and
code outputting means for outputting the decoded code discriminated by the code discriminating means as the symbol.

2. An MSK signal code decoding apparatus for decoding a symbol assigned to an MSK signal from an LMSK signal which is obtained by level control of the MSK signal which is modulated by an MSK based on a modulation method of DARC for an FM multiplexed broadcasting, **characterized by** comprising:
both sign component extracting means for extracting signals of "1" and "0" of the symbol from the MSK signal obtained by adjusting an amplitude of the input LMSK signal;
operating means for generating an MSK code obtained by removing at least a high frequency component from a signal extracted by the both sign code component extracting means;
symbol clock extracting means for extracting a symbol clock from the MSK code generated by the operating means;
code discriminating means for outputting a decoded code of which sign of the MSK code is discriminated between positive and negative on the basis of the symbol clock extracted by the symbol clock extracting means;
code correcting component extracting means for outputting a corrected code obtained by correcting the decoded code on the basis of the MSK signal and the decoded code outputted by the code discriminating mans;
code selecting means for selecting either of the corrected code outputted by the code correction component extracting means or the decoded code; and
code outputting means for outputting either of the corrected code or the decoded code which is selected by the code selecting means as the symbol.

3. An MSK signal code decoding apparatus for decoding a symbol assigned to an MSK signal from an LMSK signal which is obtained by level control of the MSK signal which is modulated by an MSK based on a modulation method of DARC for an FM multiplexed broadcasting, **characterized by** comprising:
both sign component extracting means for extracting signals of "1" and "0" of the symbol from the MSK signal obtained by adjusting an amplitude of the input LMSK signal;
operating means for generating an MSK code obtained by removing at least a high frequency component from a signal extracted by the both sign code component extracting means;
symbol clock extracting means for extracting a symbol clock from the MSK code generated by the operating means;
code discriminating means for outputting a decoded code of which sign of the MSK code is discriminated between positive and negative on the basis of the symbol clock extracted by the symbol clock extracting means;
code confirming means for forming a predetermined number of blocks each including the decoded codes and obtaining weights of the blocks on the basis of a difference between the number of positive values and the number of negative values of the decoded code in the blocks, and outputting a confirmed code obtained by confirming whether the decoded code is correct or incorrect;
code selecting means for selecting either of the confirmed code outputted by the code confirming means or the decoded code; and
code outputting means for outputting either of the confirmed code or the decoded code which is selected by the code selecting means as the symbol.

4. An MSK signal code decoding apparatus for decoding a symbol assigned to an MSK signal from an LMSK signal which is obtained by level control of the MSK signal which is modulated by an MSK based on a modulation method of DARC for an FM multiplexed broadcasting, **characterized by** comprising:
code correction component extracting means for outputting a corrected code obtained by code correction of a symbol assigned to the MSK signal on the basis of the MSK signal and a reference code in which "1" and "0" are alternately arranged sequentially for an interval of one or more symbols; and
code outputting means for outputting the corrected code outputted by the code correction component extracting means as the symbol.

5. An MSK signal code decoding apparatus for decoding a symbol assigned to an MSK signal from an LMSK signal which is obtained by level control of the MSK signal which is modulated by an MSK based on a modulation method of DARC for an FM multiplexed broadcasting, **characterized by** comprising:
both sign component extracting means for extracting signals of "1" and "0" of the symbol from the MSK signal obtained by adjusting an amplitude of the input LMSK signal;
operating means for generating an MSK code obtained by removing at least a high frequency component from a signal extracted by the both sign code component extracting means;
symbol clock extracting means for extracting a symbol clock from the MSK code generated by the operating means;
code discriminating means for outputting a decoded code of which sign of the MSK code is discriminated between positive and negative on the basis of the symbol clock extracted by the symbol clock extracting means;
code confirming means for forming a predetermined number of blocks each including the decoded codes and obtaining weights of the blocks on the basis of a difference between the number of positive values and the number of negative values of the decoded code in the blocks, and outputting a confirmed code obtained by confirming whether the decoded code is correct or incorrect;
code correction component extracting means for performing either of outputting a first corrected code obtained by performing code correction for the decoded code on the basis of the decoded code outputted by the code discriminating means, or outputting a second corrected code obtained by performing code correction for the symbol assigned to the MSK signal on the basis of the MSK signal and the confirmed code outputted by the code confirming means;
code selecting means for selecting either of the decoded code, the first corrected code, the second corrected code, or the confirmed code; and
code outputting means for outputting, as the symbol, either of the decoded code, the first corrected code, the second corrected code, or the confirmed code which is selected by the code selecting means.

6. An MSK signal code decoding program **characterized in that** the program causes a computer to function, to decode a symbol assigned to an MSK signal from an LMSK signal which is obtained by level control of the MSK signal which is modulated by an MSK which is a modulation method based on DARC for an FM multiplexed broadcasting, as:
both sign component extracting means for extracting signals of "1" and "0" of the symbol from the MSK signal obtained by adjusting an amplitude of the input LMSK signal;
operating means for generating an MSK code obtained by removing at least a high frequency component from a signal extracted by the both sign code component extracting means;
symbol clock extracting means for extracting a symbol clock from the MSK code generated by the operating means;
code discriminating means for outputting a decoded code of which sign of the MSK code is discriminated between positive and negative on the basis of the symbol clock extracted by the symbol clock extracting means; and
code outputting means for outputting the decoded code discriminated by the code discriminating means as the symbol.

7. An MSK signal code decoding program **characterized in that** the program causes a computer to function, to decode a symbol assigned to an MSK signal from an LMSK signal which is obtained by level control of the MSK signal which is modulated by an MSK which is a modulation method based on DARC for an FM multiplexed broadcasting, as:
both sign component extracting means for extracting signals of "1" and "0" of the symbol from the MSK signal obtained by adjusting an amplitude of the input LMSK signal;
operating means for generating an MSK code obtained by removing at least a high frequency component from a signal extracted by the both sign code component extracting means;
symbol clock extracting means for extracting a symbol clock from the MSK code generated by the operating means;
code discriminating means for outputting a decoded code of which sign of the MSK code is discriminated between positive and negative on the basis of the symbol clock extracted by the symbol clock extracting means;
code correcting component extracting means for outputting a corrected code obtained by correcting the decoded code on the basis of the MSK signal and the decoded code outputted by the code discriminating mans;
code selecting means for selecting either of the corrected code outputted by the code correction component extracting means or the decoded code; and
code outputting means for outputting, as the symbol, either of the corrected code or the decoded code which is selected by the code selecting means.

8. An MSK signal code decoding program **characterized in that** the program causes a computer to function, to decode a symbol assigned to an MSK signal from an LMSK signal which is obtained by level control of the MSK signal which is modulated by an MSK which is a modulation method based on DARC for an FM multiplexed broadcasting, as:
both sign component extracting means for extracting signals of "1" and "0" of the symbol from the MSK signal obtained by adjusting an amplitude of the input LMSK signal;
operating means for generating an MSK code obtained by removing at least a high frequency component from a signal extracted by the both sign code component extracting means;
symbol clock extracting means for extracting a symbol clock from the MSK code generated by the operating means;
code discriminating means for outputting a decoded code of which sign of the MSK code is discriminated between positive and negative on the basis of the symbol clock extracted by the symbol clock extracting means;
code confirming means for forming a predetermined number of blocks each including the decoded codes and obtaining weights of the blocks on the basis of a difference between the number of positive values and the number of negative values of the decoded code in the blocks, and outputting a confirmed code obtained by confirming whether the decoded code is correct or incorrect;
code selecting means for selecting either of the confirmed code outputted by the code confirming means or the decoded code; and
code outputting means for outputting, as the symbol, either of the confirmed code or the decoded code which is selected by the code selecting means.

9. An MSK signal code decoding program **characterized in that** the program causes a computer to function, to decode a symbol assigned to an MSK signal from an LMSK signal which is obtained by level control of the MSK signal which is modulated by an MSK which is a modulation method based on DARC for an FM multiplexed broadcasting, as:
code correction component extracting means for outputting a corrected code obtained by code correction of a symbol assigned to the MSK signal on the basis of the MSK signal and a reference code in which "1" and "0" are alternately arranged sequentially for an interval of one or more symbols; and
code outputting means for outputting, as the symbol, the corrected code outputted by the code correction component extracting means.

10. An MSK signal code decoding program **characterized in that** the program causes a computer to function, to decode a symbol assigned to an MSK signal from an LMSK signal which is obtained by level control of the MSK signal which is modulated by an MSK which is a modulation method based on DARC for an FM multiplexed broadcasting, as:
both sign component extracting means for extracting signals of "1" and "0" of the symbol from the MSK signal obtained by adjusting an amplitude of the input LMSK signal;
operating means for generating an MSK code obtained by removing at least a high frequency component from a signal extracted by the both sign code component extracting means;
symbol clock extracting means for extracting a symbol clock from the MSK code generated by the operating means;
code discriminating means for outputting a decoded code of which sign of the MSK code is discriminated between positive and negative on the basis of the symbol clock extracted by the symbol clock extracting means;
code confirming means for forming a predetermined number of blocks each including the decoded codes and obtaining weights in the blocks on the basis of a difference between the number of positive values and the number of negative values of the decoded code in the blocks, and outputting a confirmed code obtained by confirming whether the decoded code is correct or incorrect;
code correction component extracting means for performing either of outputting a first corrected code obtained by performing code correction for the decoded code on the basis of the decoded code outputted by the code discriminating means, or outputting a second corrected code obtained by performing code correction for the symbol assigned to the MSK signal on the basis of the MSK signal and the confirmed code outputted by the code confirming means;
code selecting means for selecting either of the decoded code, the first corrected code, the second corrected code, or the confirmed code; and
code outputting means for outputting, as the symbol, either of the decoded code, the first corrected code, the second corrected code, or the confirmed code which is selected by the code selecting means.
